# EUROPÄISCHE PATENTSCHRIFT

(11) **EP 3 246 558 B1**
(45) Veröffentlichungstag und Bekanntmachung des Hinweises auf die Patenterteilung: **19.09.2018**
(21) Anmeldenummer: 17171654.1
(22) Anmeldetag: 18.05.2017
(51) Int. Cl.: F02K 9/58, F02K 9/64, F02K 9/95

(54) **VERFAHREN ZUM BETREIBEN EINES RAKETENANTRIEBSSYSTEMS UND RAKETENANTRIEBSSYSTEM**
METHOD FOR OPERATING A ROCKET PROPULSION SYSTEM AND ROCKET PROPULSION SYSTEM
PROCEDE DE FONCTIONNEMENT D'UN SYSTEME DE PROPULSION DE FUSEE ET SYSTEME DE PROPULSION DE FUSEE

(30) Priorität: 20.05.2016 DE 102016208729
(43) Veröffentlichungstag der Anmeldung: 22.11.2017
(73) Patentinhaber: ArianeGroup GmbH, 82024 Taufkirchen (DE)
(72) Erfinder: Gotzig, Ulrich, 74177 Bad Friedrichshall (DE); Wurdak, Malte, 74219 Möckmühl (DE); Deck, Joel, 74861 Neudenau (DE); Frey, Manuel, 81549 München (DE)
(74) Vertreter: Schicker, Silvia

(56) Entgegenhaltungen:
- EP-A1- 2 604 839
- DE-A1-102009 045 704
- US-B1- 6 619 031
- Brian D Reed ET AL: "HydrogedOxy gen Auxiliary Propulsion Technology HYDROGEN/OXYGEN AUXILIARY PROPULSION TECHNOLOGY", , 4. September 1991 (1991-09-04), XP055414900, Gefunden im Internet: URL:https://ntrs.nasa.gov/archive/nasa/cas i.ntrs.nasa.gov/19920011280.pdf [gefunden am 2017-10-11]

## Beschreibung

Die Erfindung betrifft ein Verfahren zum Betreiben eines Raketenantriebssystems und ein Raketenantriebssystem.

Mit Wasserstoff betriebene Raketentriebwerke beschreiben bekannte Antriebssysteme für Raumfahrzeuge. In derartigen Raketentriebwerken wird Wasserstoff mit Sauerstoff verbrannt und dadurch Schubkraft erzeugt. Anwendung finden diese Antriebssysteme beispielsweise bei den Trägerraketen der Ariane-Serie, in denen ein mit flüssigem Wasserstoff und flüssigem Sauerstoff betriebenes Raketenantriebssystem als Hauptstufe ausgebildet ist. Der Wasserstoff und der Sauerstoff werden in dafür vorgesehenen Wasserstoff- und Sauerstofftanks gespeichert.

Weiterhin sind sogenannte Wasserelektrolyse-Antriebssysteme bekannt, wie beispielsweise aus dem NASA Technical Memorandum 113157, die in Satelliten zum Einsatz kommen können. Bei einem derartigen Wasserelektrolyse-Antriebssystem wird Wasser durch Elektrolyse in Wasserstoff und Sauerstoff aufgespalten. Der so erzeugte Wasserstoff und Sauerstoff werden daraufhin zur Schubkrafterzeugung in einer Brennkammer eines Triebwerks verbrannt. Das durch Elektrolyse aufzuspaltende Wasser kann unter Raumtemperatur gespeichert werden, während flüssiger Wasserstoff bzw. flüssiger Sauerstoff unter tiefkalten Bedingungen gespeichert werden müssen. Dies erlaubt eine aufwandsreduzierte Speicherung des Wassers über eine gesamte Missionszeit von mehreren Jahren.

Durch die Verwendung von Wasserstoff als Treibstoff in einem Raketenantrieb kann eine hohe Energieausbeute und so ein hoher spezifischer Impuls des Raketenantriebs erreicht werden. Nachteil dieser hohen Energieausbeute ist jedoch, dass bei der Verbrennung von Wasserstoff hohe Verbrennungstemperaturen erzielt werden, die insbesondere bei einer stöchiometrischen Verbrennung von Wasserstoff zu einer hohen thermischen Belastung der in einem Raketenantrieb verwendeten Materialien führt. Dies ist insbesondere bei Wasserelektrolyse-Antriebssystemen problematisch, da hier Wasserstoff und Sauerstoff in einem stöchiometrischen Mischungsverhältnis erzeugt werden.

Um die Verbrennungstemperaturen in derartigen Systemen zu limitieren, wird üblicherweise ein unterstöchiometrisches Sauerstoff-Wasserstoff-Gemisch verbrannt, wie beispielsweise in dem NASA Technical Memorandum 105249 oder der EP 2 604 839 A1 offenbart. Übrig bleibender Sauerstoff kann dann als Kaltgas verwendet und an eine Umgebung des Wasserelektrolyse-Antriebssystems abgegeben werden.
Der zu erzielende Wirkungsgrad und die Leistung derartiger Raketenantriebssysteme hängt im Wesentlichen von dem Mischungsverhältnis von Sauerstoff zu Wasserstoff des in der Brennkammer zu entzündenden Sauerstoff-Wasserstoff-Gemischs ab. Der Erfindung liegt die Aufgabe zugrunde, ein Verfahren zum Betreiben eines Raketenantriebssystems und ein Raketenantriebssystem bereitzustellen, die eine Erhöhung der Leistung und einen zuverlässigen Betrieb derartiger Raketenantriebssysteme ermöglichen.
Diese Aufgabe wird durch ein Verfahren zum Betreiben eines Raketenantriebssystems mit den Merkmalen nach Anspruch 1 und durch ein Raketenantriebssystem mit den Merkmalen nach Anspruch 9 gelöst.
Ein Verfahren zum Betreiben eines Raketenantriebssystems umfasst die Schritte des Zuführens von Sauerstoff und des Zuführens von Wasserstoff in eine Brennkammer des Raketenantriebssystems. In einem weiteren Schritt des Verfahrens wird das Sauerstoff-Wasserstoff-Gemisch in der Brennkammer verbrannt.
Das Raketenantriebssystem ist dafür vorgesehen, das Sauerstoff-Wasserstoff-Gemisch als Treibstoff-Gemisch zu verwenden, das in der Brennkammer zur Schubkrafterzeugung verbrannt wird. Die Brennkammer kann mit einer Schubdüse verbunden sein, der in der Brennkammer durch Verbrennung des Sauerstoff-Wasserstoff-Gemischs erzeugten Abgase zugeführt werden. Die Schubdüse kann dafür vorgesehen sein, die in der Brennkammer erzeugten Abgase bei ihrem Austritt aus der Brennkammer bis zu einer Austrittsöffnung der Schubdüse zu beschleunigen und daraufhin an eine Umgebung des Raketenantriebssystems mit hohen Austrittsgeschwindigkeiten abzugeben, um so eine Schubkraft zu erzeugen.
Das Verfahren sieht vor, dass das Raketenantriebssystem alternierend in einem ersten Betriebsmodus, in dem Sauerstoff und Wasserstoff in einem ersten Massenmischungsverhältnis von Sauerstoff zu Wasserstoff in die Brennkammer zugeführt werden, und in einem zweiten Betriebsmodus, in dem Sauerstoff und Wasserstoff in einem zweiten Massenmischungsverhältnis von Sauerstoff zu Wasserstoff, das größer ist als das erste Massenmischungsverhältnis, in die Brennkammer zugeführt werden, betrieben wird.

Unter einem "alternierenden Betrieb" des Raketenantriebssystems wird hier ein Betrieb verstanden, bei dem das Raketenantriebssystem abwechselnd und wiederholend in dem ersten Betriebsmodus und in dem zweiten Betriebsmodus betrieben wird.

Durch das alternierende Betreiben des Raketenantriebssystems in dem ersten Betriebsmodus, in dem Sauerstoff und Wasserstoff in dem ersten Massenmischungsverhältnis der Brennkammer zugeführt werden, und dem zweiten Betriebsmodus, in dem Sauerstoff und Wasserstoff in dem zweiten Massenmischungsverhältnis der Brennkammer zugeführt werden, kann im Vergleich zu gegenwärtig bekannten Verfahren ein Sauerstoff-Wasserstoff-Gemisch der Brennkammer zugeführt werden, das insgesamt einen höheren Anteil an Sauerstoff aufweist. Insbesondere ermöglicht das Verfahren so, dass im Mittel eine stöchiometrische Verbrennung erreicht werden kann, ohne dadurch eine zulässige thermische Belastung der in der Brennkammer zum Einsatz kommenden Materialien zu überschreiten. Dadurch kann der Gesamtmassenstrom des aus der Brennkammer in die Schubdüse austretenden Gases und insbesondere der Schub und die Leistung des Raketenantriebssystems erhöht werden.

In dem ersten Betriebsmodus kann das Raketenantriebssystem derart betrieben werden, dass durch die Verbrennung des Sauerstoff-Wasserstoff-Gemischs in der Brennkammer eine erste Verbrennungstemperatur in der Brennkammer vorherrscht. Entsprechend kann das Raketenantriebssystem in dem zweiten Betriebsmodus derart betrieben werden, dass durch die Verbrennung des Sauerstoff-Wasserstoff-Gemischs in der Brennkammer eine zweite Verbrennungstemperatur in der Brennkammer vorherrscht. Das Raketenantriebssystem kann dabei derart betrieben werden, dass die erste und die zweite Verbrennungstemperatur jeweils kleiner als eine zulässige maximale Materialtemperatur der in der Brennkammer verwendeten Materialien liegt.

Die erste Verbrennungstemperatur in der Brennkammer in dem ersten Betriebsmodus kann sich von der zweiten Verbrennungstemperatur in der Brennkammer in dem zweiten Betriebsmodus unterscheiden. Insbesondere kann die Verbrennungstemperatur in der Brennkammer in dem ersten Betriebsmodus größer sein als die zweite Verbrennungstemperatur in der Brennkammer in dem zweiten Betriebsmodus. Der zweite Betriebsmodus kann dabei zur Kühlung der Brennkammer beitragen, so dass die Temperatur der in der Brennkammer verbauten Materialien während des Betriebs des Raketenantriebssystems die zulässige maximale Materialtemperatur nicht überschreitet. In dem ersten Betriebsmodus kann so das Sauerstoff-Wasserstoff-Gemisch mit einem Massenmischungsverhältnis von Sauerstoff zu Wasserstoff verbrannt werden, das im Vergleich zu bekannten Raketenantriebssystem näher an einem stöchiometrischen Massenmischungsverhältnis liegt. Alternativ kann die erste Verbrennungstemperatur in der Brennkammer in dem ersten Betriebsmodus kleiner sein als die zweite Verbrennungstemperatur in der Brennkammer in dem zweiten Betriebsmodus.

Das hier vorgeschlagene Verfahren zum Betreiben des Raketenantriebssystems ermöglicht, dass höhere Verbrennungstemperaturen zumindest phasenweise in der Brennkammer erreicht werden können, ohne dadurch die zulässige thermische Belastung der in der Brennkammer zum Einsatz kommenden Materialien zu überschreiten. Entsprechend kann ein Sauerstoff-Wasserstoff-Gemisch zumindest phasenweise mit einem höheren Massenmischungsverhältnis von Sauerstoff zu Wasserstoff, insbesondere mit einem Massenmischungsverhältnis das näher an einem stöchiometrischen Massenmischungsverhältnis liegt, verbrannt und so eine höherer Leistung des Raketenantriebssystems erreicht werden.

In dem Verfahren zum Betreiben des Raketenantriebssystems kann das erste Massenmischungsverhältnis ein unterstöchiometrisches Massenmischungsverhältnis von Sauerstoff zu Wasserstoff sein, insbesondere ein Massenmischungsverhältnis kleiner als oder gleich 2. Das zweite Massenmischungsverhältnis kann ein überstöchiometrisches Massenmischungsverhältnis von Sauerstoff zu Wasserstoff sein, insbesondere ein Massenmischungsverhältnis größer als oder gleich 50.

Um Sauerstoff und Wasserstoff in dem ersten Betriebsmodus in dem ersten Massenmischungsverhältnis und in dem zweiten Betriebsmodus in dem zweiten Massenmischungsverhältnis in die Brennkammer zu leiten, kann in dem ersten Betriebsmodus des Raketenantriebssystems ein erster Wasserstoffmassenstrom in die Brennkammer zugeführt werden, der größer ist als ein zweiter Wasserstoffmassenstrom der in dem zweiten Betriebsmodus des Raketenantriebssystems in die Brennkammer zugeführt wird. Insbesondere kann in dem zweiten Betriebsmodus des Raketenantriebssystems die Zufuhr von Wasserstoff in die Brennkammer unterbrochen werden.

Alternativ oder zusätzlich kann in dem ersten Betriebsmodus des Raketenantriebssystems ein erster Sauerstoffmassenstrom in die Brennkammer zugeführt werden, der kleiner ist als ein zweiter Sauerstoffmassenstrom, der in dem zweiten Betriebsmodus des Raketenantriebssystems in die Brennkammer zugeführt wird.

In einer Weiterentwicklung des Verfahrens kann ein Teil des in die Brennkammer zugeführten Sauerstoffs und zumindest ein Teil des in die Brennkammer zugeführten Wasserstoffs in eine Katalysatorkammer geleitet werden und in der Katalysatorkammer die Verbrennung des Sauerstoff-Wasserstoff-Gemischs initiiert werden.

Die Katalysatorkammer ist vorzugsweise dazu eingerichtet, eine Verbrennung des in die Katalysatorkammer eingeleiteten Wasserstoff-Sauerstoff-Gemischs mittels eines Katalysators zu initiieren. Mit anderen Worten, die Katalysatorkammer kann einen Strömungsabschnitt eines aus zumindest einem Teil des in die Brennkammer geleiteten Wasserstoffs und zumindest einem Teil des in die Brennkammer geleiteten Sauerstoffs gebildeten Sauerstoff-Wasserstoff-Gemischs ausbilden, in dem mittels eines Katalysators die Aktivierungsenergie zur Initiierung der Verbrennung des der Katalysatorkammer zugeführten Wasserstoff-Sauerstoff-Gemischs herabgesetzt wird, so dass das die Katalysatorkammer durchströmende Sauerstoff-Wasserstoff-Gemisch entzündet wird. Die Verwendung einer Katalysatorkammer weist den Effekt einer stabilen Zündung des in die Brennkammer geleiteten Sauerstoff-Wasserstoff-Gemischs auf.

Das Verfahren kann dafür vorgesehen sein, dass der zumindest eine Teil des in die Brennkammer geleiteten Wasserstoffs und der zumindest eine Teil des in die Brennkammer geleiteten Sauerstoffs derart in die Katalysatorkammer geleitet werden, dass das der Katalysatorkammer zugeführte Sauerstoff-Wasserstoff-Gemisch in dem ersten und/oder dem zweiten Betriebsmodus des Raketenantriebssystems ein Massenmischungsverhältnis von Sauerstoff zu Wasserstoff aufweist, das unterstöchiometrisch und insbesondere kleiner als oder gleich 2 ist. Indem das die Katalysatorkammer durchströmende Sauerstoff-Wasserstoff-Gemisch in dem ersten und/oder dem zweiten Betriebsmodus des Raketenantriebssystems ein unterstöchiometrisches Massenmischungsverhältnis, insbesondere ein Massenmischungsverhältnis kleiner als oder gleich 2, aufweisen kann, kann die Dauerfestigkeit des in der Katalysatorkammer verwendeten Katalysators erhöht werden.

In einer Weiterentwicklung kann im Bereich einer Eingangsfläche der Katalysatorkammer, über die der Katalysatorkammer Wasserstoff und Sauerstoff zugeführt werden, ein Flammenrückschlagverhinderer angeordnet sein. Der Flammenrückschlagverhinderer kann dazu eingerichtet sein, eine Entzündung des in die Katalysatorkammer zuzuführenden Sauerstoff-Wasserstoff-Gemischs stromaufwärts der Katalysatorkammer zu verhindern. Der Begriff "stromaufwärts" bezieht sich hier auf die Richtung der durch die Katalysatorkammer strömenden Gase.
Der in die Katalysatorkammer geleitete Sauerstoff und der in die Katalysatorkammer geleitete Wasserstoff können in einer Vormischkammer der Katalysatorkammer vor der Initiierung der Verbrennung des Sauerstoff-Wasserstoff-Gemischs vorgemischt werden. Mit anderen Worten, die Vormischkammer kann dazu eingerichtet sein, den der Katalysatorkammer zuzuführenden Sauerstoff und den der Katalysatorkammer zuzuführenden Wasserstoff miteinander zu vermischen, um das in die Katalysatorkammer einzuleitende Sauerstoff-Wasserstoff-Gemisch zu erzeugen. Die Vormischkammer kann stromaufwärts der Eingangsfläche der Katalysatorkammer angeordnet sein und insbesondere in die Eingangsfläche der Katalysatorkammer münden. Weiterhin kann die Vormischkammer derart ausgebildet sein, dass diese einen sich in Strömungsrichtung größer werdenden Strömungsquerschnitt für die der Katalysatorkammer zuzuführenden Gase aufweist. So kann das die Vormischkammer durchströmende Sauerstoff-Wasserstoff-Gemisch entspannt und gebremst werden, was zu einer verbesserten Vermischung des Sauerstoff-Wasserstoff-Gemischs führen kann.

Stromabwärts einer Ausgangsfläche der Katalysatorkammer, über die in der Katalysatorbrennkammer erzeugte Abgase aus der Katalysatorkammer austreten können, kann ein Verbrennungsabschnitt in der Brennkammer vorgesehen sein. Der Begriff "stromabwärts" bezieht sich hier auf die Richtung der aus der Katalysatorkammer austretenden Gase. Dem Gesamtverbrennungsabschnitt in der Brennkammer können die aus der Katalysatorkammer austretenden Gase, die insbesondere nicht verbrannten Wasserstoff umfassen können, zugeführt werden.

Das Verfahren kann ferner vorsehen, dass Sauerstoff über eine Sauerstoffzufuhröffnung, die in einer einem Sauerstoffzufuhrkanal zugewandten Katalysatorkammerwand ausgebildet sein kann, in die Katalysatorkammer zugeführt wird.

Der Sauerstoffzufuhrkanal kann dafür vorgesehen sein, den in die Brennkammer zugeführten Sauerstoff innerhalb der Brennkammer zu leiten und insbesondere zumindest einen Teil des in die Brennkammer zugeführten Sauerstoffs der Katalysatorkammer, insbesondere der Vormischkammer der Katalysatorkammer, und/oder dem Verbrennungsabschnitt in der Brennkammer zuzuführen.

Der der Katalysatorkammer zuzuführende Wasserstoff kann über einen Wasserstoffzufuhrkanal der Katalysatorkammer zugeführt werden. Der Wasserstoffzufuhrkanal kann dafür vorgesehen sein, den in die Brennkammer zugeführten Wasserstoff innerhalb der Brennkammer zu leiten und insbesondere zumindest einen Teil des in die Brennkammer zugeführten Wasserstoffs der Katalysatorkammer, insbesondere der Vormischkammer der Katalysatorkammer, und/oder dem Verbrennungsabschnitt in der Brennkammer zuzuführen. Um den der Katalysatorkammer zuzuführenden Wasserstoff der Katalysatorkammer zuzuführen, kann der Wasserstoffzufuhrkanal in die Katalysatorkammer münden. Alternativ kann der der Katalysatorkammer zuzuführende Wasserstoff über eine Wasserstoffzufuhröffnung, die in einer dem Wasserstoffzufuhrkanal zugewandten Katalysatorkammerwand ausgebildet sein kann, in die Katalysatorkammer zugeführt werden. Die Sauerstoffzufuhröffnung und/oder die Wasserstoffzufuhröffnung sind/ist vorzugsweise in einem Bereich der Eingangsfläche der Katalysatorkammer, insbesondere in der Katalysatorkammerwand, ausgebildet.

In einer Weiterentwicklung kann die Katalysatorkammerwand die Vormischkammer und/oder den Wasserstoffzufuhrkanal bilden. Weiterhin kann der Sauerstoffzufuhrkanal zumindest abschnittsweise zwischen einer Innenfläche der Brennkammer und einer Außenfläche der Katalysatorkammerwand ausgebildet sein. Alternativ kann die Katalysatorkammerwand die Vormischkammer und/oder den Sauerstoffzufuhrkanal bilden. Weiterhin kann der Wasserstoffzufuhrkanal zumindest abschnittsweise zwischen der Innenfläche der Brennkammer und der Außenfläche der Katalysatorkammerwand ausgebildet sein.

Ferner kann die Katalysatorkammer zumindest abschnittsweise von einem zwischen einer Außenfläche der Katalysatorkammer und der Innenfläche der Brennkammer angeordneten Kühlkanal umgeben sein. Der Kühlkanal kann in den stromabwärts der Ausgangsfläche der Katalysatorkammer angeordneten Verbrennungsabschnitt der Brennkammer münden. Über den Kühlkanal kann dem Verbrennungsabschnitt in die Brennkammer zugeführter Sauerstoff zugeführt werden. Mit anderen Worten, der Kühlkanal kann dazu eingerichtet sein, von in die Brennkammer zugeführtem Sauerstoff durchströmt zu werden. Entsprechend kann der Kühlkanal mit dem Sauerstoffzufuhrkanal verbunden sein, wobei der Sauerstoffzufuhrkanal insbesondere in den Kühlkanal münden kann.

Das Verfahren zum Betreiben des Raketenantriebssystems kann dazu eingerichtet sein, dass ein durch den Kühlkanal strömender Sauerstoffmassenstrom in dem ersten Betriebsmodus und in dem zweiten Betriebsmodus des Raketenantriebssystems variiert wird. Insbesondere kann das Verfahren dazu eingerichtet sein, dass der Kühlkanal nur in dem zweiten Betriebsmodus Raketenantriebssystems von Sauerstoff durchströmt wird. Hierzu kann der Kühlkanal nicht mit dem Sauerstoffzufuhrkanal verbunden sein. Mit anderen Worten, der Kühlkanal kann von dem Sauerstoffzufuhrkanal getrennt sein. Im Speziellen kann das Verfahren zum Betreiben des Raketenantriebssystems dazu eingerichtet sein, dass in dem ersten Betriebsmodus, in dem Sauerstoff und Wasserstoff in dem ersten Massenmischungsverhältnis der Brennkammer zugeführt werden, der der Brennkammer zugeführte Sauerstoff vollständig der Katalysatorkammer zugeführt wird und in dem zweiten Betriebsmodus, in dem Sauerstoff und Wasserstoff in dem zweiten Massenmischungsverhältnis der Brennkammer zugeführt werden, zusätzlich Sauerstoff über den Kühlkanal in den Verbrennungsabschnitt zugeführt wird. Der über den Kühlkanal dem Verbrennungsabschnitt in dem zweiten Betriebsmodus zugeführte Sauerstoff kann mit dem aus der Katalysatorkammer austretenden Sauerstoff-Wasserstoff-Gemisch verbrannt werden. Das Verfahren zum Betreiben des Raketenantriebssystems kann ferner derart eingerichtet sein, dass ein der Katalysatorkammer über den Sauerstoffzufuhrkanal zugeführter Sauerstoffmassenstrom in dem ersten Betriebsmodus und dem zweiten Betriebsmodus des Raketenantriebssystems konstant gehalten oder variiert wird.
Alternativ kann dem Verbrennungsabschnitt über den Kühlkanal in die Brennkammer zugeführter Wasserstoff zugeführt werden. Entsprechend kann der Kühlkanal dazu eingerichtet sein, von in die Brennkammer zugeführtem Wasserstoff durchströmt zu werden. Der Kühlkanal kann dabei mit dem Wasserstoffzufuhrkanal verbunden sein, wobei der Wasserstoffzufuhrkanal insbesondere in den Kühlkanal mündet. Alternativ kann der Kühlkanal mit dem Wasserstoffzufuhrkanal nicht verbunden und daher von diesem getrennt sein.
Der Kühlkanal kann dazu eingerichtet sein, die den Kühlkanal durchströmenden Gase entlang der Außenfläche der Katalysatorkammer, insbesondere der Außenfläche der Katalysatorkammerwand zu leiten. Dies hat den Effekt, dass entlang der Außenfläche der Katalysatorkammer strömende Gase, insbesondere den Kühlkanal durchströmender Sauerstoff oder Wasserstoff, sich erwärmen und so die Katalysatorkammer kühlen können.
In einer Weiterentwicklung kann in dem Kühlkanal ein Drallerzeugungsmittel, insbesondere ein Swirler, vorgesehen sein. Alternativ kann das Drallerzeugungsmittel in Form von in dem Kühlkanal vorgesehenen tangential angestellten Bohrungen bereitgestellt sein. Durch die Verwendung des in dem Kühlkanal angeordneten Drallerzeugungsmittels kann die Verweilzeit der den Kühlkanal durchströmenden Gase in dem Kühlkanal erhöht werden. So kann die durch die den Kühlkanal durchströmenden Gase bereitgestellte Kühlfunktion verbessert werden.
Alternativ oder zusätzlich kann die Katalysatorkammer zumindest abschnittsweise von einem Kernkanal durchsetzt werden. Der Kernkanal kann in den stromabwärts der Ausgangsfläche der Katalysatorkammer angeordneten Verbrennungsabschnitt der Brennkammer münden. Über den Kernkanal kann dem Verbrennungsabschnitt in die Brennkammer zugeführter Sauerstoff zugeführt werden. Mit anderen Worten, der Kernkanal kann dazu eingerichtet sein, von in die Brennkammer zugeführtem Sauerstoff durchströmt zu werden. Entsprechend kann der Kernkanal mit dem Sauerstoffzufuhrkanal verbunden sein, wobei der Sauerstoffzufuhrkanal insbesondere in den Kernkanal münden kann.
Das Verfahren zum Betreiben des Raketenantriebssystems kann dazu eingerichtet sein, dass ein durch den Kernkanal strömender Sauerstoffmassenstrom in dem ersten Betriebsmodus und dem zweiten Betriebsmodus des Raketenantriebssystems variiert wird. Insbesondere kann das Verfahren dazu eingerichtet sein, dass der Kernkanal nur in dem zweiten Betriebsmodus Raketenantriebssystems von Sauerstoff durchströmt wird. Hierzu kann der Kernkanal nicht mit dem Sauerstoffzufuhrkanal verbunden und daher von diesem getrennt sein. Im Speziellen kann das Verfahren zum Betreiben des Raketenantriebssystems dazu eingerichtet sein, dass in dem ersten Betriebsmodus, in dem Sauerstoff und Wasserstoff in dem ersten Massenmischungsverhältnis der Brennkammer zugeführt werden, der der Brennkammer zugeführte Sauerstoff vollständig in die Katalysatorkammer zugeführt wird und in dem zweiten Betriebsmodus, in dem Sauerstoff und Wasserstoff in dem Zweiten Massenmischungsverhältnis der Brennkammer zugeführt werden, zusätzlich Sauerstoff über den Kernkanal in den Verbrennungsabschnitt zugeführt wird. Der über den Kernkanal in dem zweiten Betriebsmodus dem Verbrennungsabschnitt zugeführte Sauerstoff kann mit dem aus der Katalysatorkammer austretenden Sauerstoff-Wasserstoff-Gemisch verbrannt werden. Das Verfahren zum Betreiben des Raketenantriebssystems kann ferner derart eingerichtet sein, dass ein der Katalysatorkammer über den Sauerstoffzufuhrkanal zugeführter Sauerstoffmassenstrom in dem ersten Betriebsmodus und dem zweiten Betriebsmodus des Raketenantriebssystems konstant gehalten oder variiert wird.
Alternativ kann dem Verbrennungsabschnitt über den Kernkanal in die Brennkammer zugeführter Wasserstoff zugeführt werden. Entsprechend kann der Kernkanal dazu eingerichtet sein, von in die Brennkammer zugeführtem Wasserstoff durchströmt zu werden. Der Kernkanal kann dabei mit dem Wasserstoffzufuhrkanal verbunden sein, wobei der Wasserstoffzufuhrkanal insbesondere in den Kernkanal mündet. Alternativ kann der Kühlkanal mit dem Wasserstoffzufuhrkanal nicht verbunden und daher von diesem getrennt sein.

Der Kernkanal kann dazu eingerichtet sein, die den Kernkanal durchströmenden Gase entlang einer inneren Katalysatorkammerwand, insbesondere einer Außenfläche der inneren Katalysatorkammerwand zu leiten. Dies hat den Effekt, dass entlang der inneren Katalysatorkammerwand strömende Gase, insbesondere den Kernkanal durchströmender Sauerstoff oder Wasserstoff, sich erwärmen und so die Katalysatorkammer kühlen können.

Ein Raketenantriebssystem umfasst eine Brennkammer, ein Sauerstoff-Zufuhrsystem, das dazu eingerichtet ist, Sauerstoff in die Brennkammer zuzuführen, und ein Wasserstoff-Zufuhrsystem, das dazu eingerichtet ist, Wasserstoff in die Brennkammer zuzuführen. Ein Zündsystem des Raketenantriebssystems ist dazu eingerichtet, eine Verbrennung des Sauerstoff-Wasserstoff-Gemischs in der Brennkammer zu initiieren. Das Raketenantriebssystem umfasst weiterhin eine Steuereinheit, die dazu eingerichtet ist, dass Sauerstoff-Zufuhrsystem und das Wasserstoff-Zufuhrsystem derart zu steuern, dass das Raketenantriebssystem alternierend in einem ersten Betriebsmodus, in dem Sauerstoff und Wasserstoff in einem ersten Massenmischungsverhältnis von Sauerstoff zu Wasserstoff in die Brennkammer zugeführt werden, und in einem zweiten Betriebsmodus, in dem Sauerstoff und Wasserstoff in einem zweiten Massenmischungsverhältnis von Sauerstoff zu Wasserstoff, das größer ist als das erste Massenmischungsverhältnis, in die Brennkammer zugeführt werden, betrieben wird.

Das erste Massenmischungsverhältnis kann ein unterstöchiometrisches Massenmischungsverhältnis von Sauerstoff zu Wasserstoff sein, insbesondere ein Massenmischungsverhältnis kleiner als oder gleich 2. Das zweite Massenmischungsverhältnis kann ein überstöchiometrisches Massenmischungsverhältnis von Sauerstoff zu Wasserstoff sein, insbesondere ein Massenmischungsverhältnis größer als oder gleich 50.

In einer Weiterentwicklung kann die Steuereinheit dazu eingerichtet sein, das Sauerstoff-Zufuhrsystem und das Wasserstoff-Zufuhrsystem derart zu steuern, dass in dem ersten Betriebsmodus des Raketenantriebssystems ein erster Wasserstoffmassenstrom in die Brennkammer zugeführt wird, der größer ist als ein zweiter Wasserstoffmassenstrom, der im zweiten Betriebsmodus des Raketenantriebssystems in die Brennkammer zugeführt wird. Insbesondere kann die Steuereinheit dazu eingerichtet sein, das Sauerstoff-Zufuhrsystem und das Wasserstoff-Zufuhrsystem derart zu steuern, dass im zweiten Betriebsmodus des Raketenantriebssystems die Zufuhr von Wasserstoff in die Brennkammer unterbrochen wird.

Alternativ oder zusätzlich kann die Steuereinheit dazu eingerichtet sein, das Sauerstoff-Zufuhrsystem und das Wasserstoff-Zufuhrsystem derart zu steuern, dass in dem ersten Betriebsmodus des Raketenantriebssystems ein erster Sauerstoffmassenstrom in die Brennkammer zugeführt wird, der kleiner ist als ein zweiter Sauerstoffmassenstrom, der in dem zweiten Betriebsmodus des Raketenbetriebssystems in die Brennkammer zugeführt wird.

Das Sauerstoff-Zufuhrsystem kann eine Sauerstoffzufuhrleitung umfassen, die mit der Brennkammer verbunden und von der Brennkammer zuzuführendem Sauerstoff durchströmbar sein kann. Weiterhin kann das Sauerstoff-Zufuhrsystem einen mit der Sauerstoffzufuhrleitung verbundenen Sauerstoff-Speicher zum Speichern von Sauerstoff umfassen. Die Sauerstoffzufuhrleitung kann dazu eingerichtet sein, Sauerstoff aus dem Sauerstoff-Speicher der Brennkammer zuzuführen. In der Sauerstoffzufuhrleitung kann ein mit der Steuereinheit verbundenes Sauerstoffzufuhrventil bereitgestellt sein. Die Steuereinheit kann dazu eingerichtet sein, über das Sauerstoffzufuhrventil den in die Brennkammer zuzuführenden Sauerstoffmassenstrom zu steuern.

Entsprechend kann das Wasserstoff-Zufuhrsystem eine Wasserstoffzufuhrleitung umfassen, die mit der Brennkammer verbunden und von der Brennkammer zuzuführendem Wasserstoff durchströmbar sein kann. Das Wasserstoff-Zufuhrsystem kann weiterhin einen Wasserstoff-Speicher zum Speichern von Wasserstoff umfassen. Die Wasserstoffzufuhrleitung kann dazu eingerichtet sein, Wasserstoff aus dem Wasserstoff-Speicher der Brennkammer zuzuführen. In der Wasserstoffzufuhrleitung kann ein mit der Steuereinheit verbundenes Wasserstoffzufuhrventil bereitgestellt sein. Die Steuereinheit kann dazu eingerichtet sein, über das Wasserstoffzufuhrventil den in die Brennkammer zuzuführenden Wasserstoffmassenstrom zu steuern.

In einer Weiterentwicklung können das Sauerstoff-Zufuhrsystem und das Wasserstoff-Zufuhrsystem mit einer Elektrolyseeinheit verbunden sein, die dazu eingerichtet sein kann, aus einem Wasserspeicher über eine Wasserleitung in die Elektrolyseeinheit zugeführtes Wasser durch Elektrolyse in Wasserstoff und Sauerstoff aufzuspalten. Der in der Elektrolyseeinheit erzeugte Sauerstoff kann über eine Sauerstoffleitung dem Sauerstoff-Zufuhrsystem, insbesondere dem Sauerstoff-Speicher des Sauerstoff-Zufuhrsystems, zugeführt werden. Entsprechend kann der in der Elektrolyseeinheit erzeugte Wasserstoff über eine Wasserstoffleitung dem Wasserstoff-Zufuhrsystem, insbesondere dem Wasserstoff-Speicher des Wasserstoff-Zufuhrsystems, zugeführt werden.
Das Zündsystem des Raketenantriebssystems ist dazu eingerichtet, die Verbrennung des der Brennkammer zugeführten Sauerstoff-Wasserstoff-Gemischs zu initiieren. Das Zündsystem kann in Form einer in der Brennkammer angeordneten Katalysatorkammer bereitgestellt sein.

Die Steuereinheit kann dazu eingerichtet sein, das Sauerstoff-Zufuhrsystem, das Wasserstoff-Zufuhrsystem und das Zündsystem derart zu steuern, dass zumindest ein Teil des in die Brennkammer zugeführten Sauerstoffs und zumindest ein Teil des in die Brennkammer zugeführten Wasserstoffs in die Katalysatorkammer geleitet werden und in der Katalysatorkammer die Verbrennung des Sauerstoff-Wasserstoff-Gemischs initiiert wird.

Die Katalysatorkammer kann derart bereitgestellt sein, dass im Bereich einer Eingangsfläche, über die der Katalysatorkammer Wasserstoff und Sauerstoff zuführbar sind, ein Flammenrückschlagverhinderer angeordnet sein kann. Die Katalysatorkammer kann weiterhin eine Vormischkammer zur Vormischung des in die Katalysatorkammer geleiteten Sauerstoffs und des in Katalysatorkammer geleiteten Wasserstoffs vor der Initiierung der Verbrennung des Sauerstoff-Wasserstoff-Gemischs umfassen.

Damit der Katalysatorkammer Sauerstoff zuführbar ist, kann eine Sauerstoffzufuhröffnung zur Zufuhr von Sauerstoff in die Katalysatorkammer in einer einem Sauerstoffzufuhrkanal zugewandten Katalysatorkammerwand ausgebildet sein.

Das Raketenantriebssystem kann weiterhin einen in der Brennkammer angeordneten Wasserstoffzufuhrkanal zur Zufuhr von Wasserstoff in die Katalysatorkammer umfassen. Der Wasserstoffzufuhrkanal kann insbesondere in die Katalysatorkammer münden. Alternativ kann eine Wasserstoffzufuhröffnung zur Zufuhr von Wasserstoff in die Katalysatorkammer in einer dem Wasserstoffzufuhrkanal zugewandten Katalysatorkammerwand ausgebildet sein.

In einer Weiterentwicklung kann die Katalysatorkammer zumindest abschnittsweise von einem zwischen einer Außenfläche der Katalysatorkammer und einer Innenfläche der Brennkammer angeordneten Kühlkanal umgeben sein. Der Kühlkanal kann in einen stromabwärts einer Ausgangsfläche der Katalysatorkammer angeordneten Verbrennungsabschnitt der Brennkammer münden. Die Steuereinheit kann dazu eingerichtet sein, dass Sauerstoff-Zufuhrsystem oder das Wasserstoff-Zufuhrsystem derart zu steuern, dass der Kühlkanal von in die Brennkammer zugeführtem Sauerstoff oder von in die Brennkammer zugeführtem Wasserstoff durchströmt wird. Insbesondere kann die Steuereinheit dazu eingerichtet sein, das Sauerstoff-Zufuhrsystem derart zu steuern, dass der Kühlkanal nur im zweiten Betriebsmodus des Raketenantriebssystems von Sauerstoff durchströmt wird.

In dem Kühlkanal kann weiterhin ein Drallerzeugungsmittel, insbesondere ein Swirler, vorgesehen sein. Alternativ kann das Drallerzeugungsmittel in Form von in dem Kühlkanal vorgesehenen tangential angestellten Bohrungen bereitgestellt sein. Das Drallerzeugungsmittel kann dazu eingerichtet sein, die den Kühlkanal durchströmenden Gase in Drall zu versetzen und so die Verweilzeit der den Kühlkanal durchströmenden Gase in dem Kühlkanal zu erhöhen.

Alternativ oder zusätzlich kann die Katalysatorkammer zumindest abschnittsweise von einem Kernkanal durchsetzt werden. Die Steuereinheit kann dazu eingerichtet sein, dass Sauerstoff-Zufuhrsystem derart zu steuern, dass der Kernkanal nur in dem zweiten Betriebsmodus des Raketenantriebssystems von Sauerstoff durchströmt wird.

Bevorzugte Ausführungsformen der Erfindung werden im Folgenden anhand der beigefügten schematischen Zeichnungen näher erläutert, wobei
Figur 1 eine schematische Ansicht eines Raketenantriebssystems zeigt,
Figur 2 ein Diagramm zeigt, dass einen Zusammenhang zwischen der Verbrennungstemperatur in einer Brennkammer und einem Mischungsverhältnis eines in der Brennkammer zu entzündenden Sauerstoff-Wasserstoff-Gemischs veranschaulicht,
Figur 3 einen vergrößerten Längsschnitt einer in Figur 1 gezeigten Brennkammer des Raketenantriebssystems einer ersten Ausführungsform zeigt,
Figur 4 einen vergrößerten Längsschnitt der in Figur 1 gezeigten Brennkammer des Raketenantriebssystems einer zweiten Ausführungsform zeigt,
Figur 5 einen vergrößerten Längsschnitt der in Figur 1 gezeigten Brennkammer des Raketenantriebssystems einer dritten Ausführungsform zeigt,
Figur 6 eine schematische Ansicht eines Raketenantriebssystems einer vierten Ausführungsform zeigt,
Figur 7 einen vergrößerten Längsschnitt einer in Figur 6 gezeigten Brennkammer des Raketenantriebssystems der vierten Ausführungsform zeigt,
Figur 8 einen vergrößerten Längsschnitt der in Figur 8 gezeigten Brennkammer des Raketenantriebssystems einer fünften Ausführungsform zeigt.

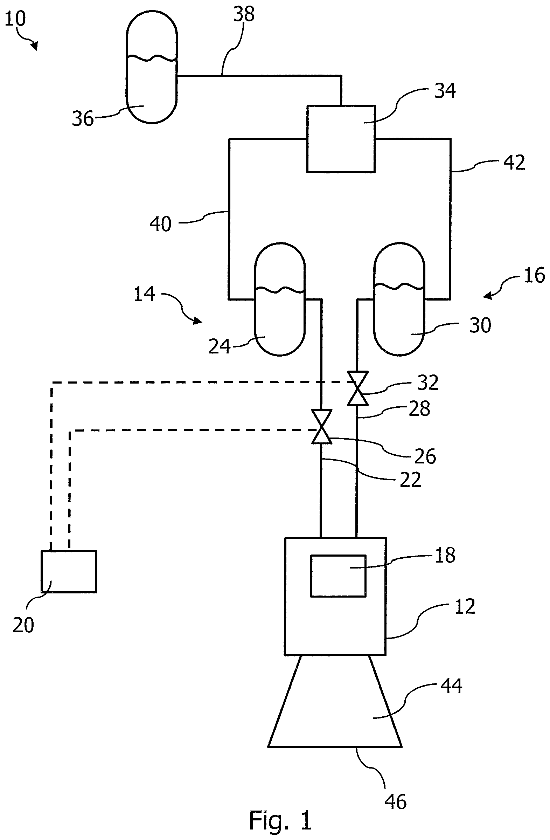

Figur 1 zeigt ein Raketenantriebssystem 10, das eine Brennkammer 12, ein mit der Brennkammer 12 verbundenes Sauerstoff-Zufuhrsystem 14 und ein mit der Brennkammer verbundenes Wasserstoff-Zufuhrsystem 16 umfasst. Das Sauerstoff-Zufuhrsystem 14 ist dazu eingerichtet, Sauerstoff in die Brennkammer 12 zuzuführen. Entsprechend ist das Wasserstoff-Zufuhrsystem 16 dazu eingerichtet, Wasserstoff in die Brennkammer 12 zuzuführen. Ein Zündsystem 18 des Raketenantriebssystems 10 ist dazu eingerichtet, eine Verbrennung des Sauerstoff-Wasserstoff-Gemischs in der Brennkammer 12 zu initiieren.

Das Raketenantriebssystem 10 umfasst weiterhin eine Steuereinheit 20, die dazu eingerichtet ist, das Sauerstoff-Zufuhrsystem 14 und das Wasserstoff-Zufuhrsystem 16 derart zu steuern, dass das Raketenantriebssystem 10 alternierend in einem ersten Betriebsmodus, in dem Sauerstoff und Wasserstoff in einem ersten Massenmischungsverhältnis von Sauerstoff zu Wasserstoff in die Brennkammer 12 zugeführt werden, und in einem zweiten Betriebsmodus, in dem Sauerstoff und Wasserstoff in einem zweiten Massenmischungsverhältnis von Sauerstoff zu Wasserstoff, das größer ist als das erste Massenmischungsverhältnis, in die Brennkammer 12 zugeführt werden, betrieben wird.

Das Sauerstoff-Zufuhrsystem 14 umfasst eine mit der Brennkammer 12 verbundene Sauerstoffzufuhrleitung 22, die von der Brennkammer 12 zuzuführendem Sauerstoff durchströmbar ist. Die Sauerstoffzufuhrleitung 22 ist mit einem Sauerstoff-Speicher 24 des Sauerstoff-Zufuhrsystems 14 zum Speichern von Sauerstoff verbunden und dazu eingerichtet, Sauerstoff aus dem Sauerstoff-Speicher 24 der Brennkammer 12 zuzuführen. In der Sauerstoffzufuhrleitung 22 ist ein mit der Steuereinheit 20 verbundenes Sauerstoffzufuhrventil 26 bereitgestellt, wobei ein der Brennkammer 12 zuzuführender Sauerstoffmassenstrom mittels des Sauerstoffzufuhrventils 26 einstellbar ist. Die Steuereinheit 20 ist dazu eingerichtet, über das Sauerstoffzufuhrventil 26 den in die Brennkammer 12 zuzuführenden Sauerstoffmassenstrom zu steuern.

Das Wasserstoff-Zufuhrsystem 16 umfasst eine mit der Brennkammer 12 verbundene Wasserstoffzufuhrleitung 28, die von der Brennkammer 12 zuzuführendem Wasserstoff durchströmbar ist. Die Wasserstoffzufuhrleitung 28 ist mit einem Wasserstoff-Speicher 30 des Wasserstoff-Zufuhrsystems 16 zum Speichern von Wasserstoff verbunden und dazu eingerichtet, Wasserstoff aus dem Wasserstoff-Speicher 30 der Brennkammer 12 zuzuführen. In der Wasserstoffzufuhrleitung 28 ist ein mit der Steuereinheit 20 verbundenes Wasserstoffzufuhrventil 32 bereitgestellt, mittels dessen ein über die Wasserstoffzufuhrleitung 28 der Brennkammer 12 zuzuführender Wasserstoffmassenstrom einstellbar ist. Die Steuereinheit 20 ist dazu eingerichtet, über das Wasserstoffzufuhrventil 32 den in die Brennkammer 12 zuzuführenden Wasserstoffmassenstrom zu steuern.

Das Sauerstoff-Zufuhrsystem 14 und das Wasserstoff-Zufuhrsystem 16 sind mit einer Elektrolyseeinheit 34 verbunden. Die Elektrolyseeinheit 34 ist dazu eingerichtet, aus einem Wasserspeicher 36 über eine Wasserleitung 38 in die Elektrolyseeinheit 34 zugeführtes Wasser durch Elektrolyse in Wasserstoff und Sauerstoff aufzuspalten. In der Wasserleitung kann ferner ein mit der Steuereinheit 20 verbundenes Wasserzufuhrventil bereitgestellt sein, wobei ein der Elektrolyseeinheit 34 zuführender Wassermassenstrom mittels des Wasserzufuhrventils einstellbar ist. Stromaufwärts des Wasserzufuhrventils, d.h. entgegen der Zufuhrrichtung des Wassers, kann zudem ein Rückschlagventil angeordnet sein. Der in der Elektrolyseeinheit 34 erzeugte Sauerstoff ist über eine Sauerstoffleitung 40 dem Sauerstoff-Speicher 24 zuführbar. Entsprechend ist der in der Elektrolyseeinheit 34 erzeugte Wasserstoff über eine Wasserstoffleitung 42 dem Wasserstoff-Speicher 30 zuführbar. In der Sauerstoffleitung 40 und in der Wasserstoffleitung 42 kann zudem jeweils ein Rückschlagventil vorgesehen sein.

Die Brennkammer 12 des Raketenantriebssystems 10 ist mit einer Schubdüse 44 verbunden, der die in der Brennkammer 12 durch Verbrennung des Sauerstoff-Wasserstoff-Gemischs entstehenden Abgase zuführbar sind. Die Schubdüse 44 ist dafür vorgesehen, die in der Brennkammer 12 erzeugten Abgase bei ihrem Austritt aus der Brennkammer 12 bis zu einer Austrittsöffnung 46 der Schubdüse 44 zu beschleunigen und daraufhin an eine Umgebung des Raketenantriebssystems 10 mit hohen Austrittsgeschwindigkeiten abzugeben, um eine Schubkraft zu erzeugen.

Die Steuereinheit 20 ist vorzugsweise dazu eingerichtet, das Sauerstoff-Zufuhrsystem 14 und das Wasserstoff-Zufuhrsystem 16 derart zu steuern, dass der Brennkammer 12 des Raketenantriebssystems 10 in dem ersten Betriebsmodus Sauerstoff und Wasserstoff in dem ersten Massenmischungsverhältnis zugeführt werden, wobei das erste Massenmischungsverhältnis ein unterstöchiometrisches Massenmischungsverhältnis von Sauerstoff zu Wasserstoff ist, insbesondere ein Massenmischungsverhältnis kleiner als oder gleich 2. In dem zweiten Betriebsmodus des Raketenantriebssystems 10 ist die Steuereinheit 20 vorzugsweise dazu eingerichtet, das Sauerstoff-Zufuhrsystem 14 und das Wasserstoff-Zufuhrsystem 16 derart zu steuern, dass der Brennkammer 12 des Raketenantriebssystems 10 Sauerstoff und Wasserstoff in dem zweiten Massenmischungsverhältnis zugeführt werden, wobei das zweite Massenmischungsverhältnis ein überstöchiometrisches Massenmischungsverhältnis von Sauerstoff zu Wasserstoff ist, insbesondere ein Massenmischungsverhältnis größer als oder gleich 50.

Im Speziellen kann die Steuereinheit 20 dazu eingerichtet sein, das Sauerstoff-Zufuhrsystem 14 und das Wasserstoff-Zufuhrsystem 16 derart zu steuern, dass im ersten Betriebsmodus des Raketenantriebssystems 10 ein erster Wasserstoffmassenstrom in die Brennkammer 12 zugeführt wird, der größer ist als ein zweiter Wasserstoffmassenstrom, der im zweiten Betriebsmodus des Raketenantriebssystems 10 in die Brennkammer 12 zugeführt wird. Insbesondere kann die Steuereinheit 20 dazu eingerichtet sein, das Sauerstoff-Zufuhrsystem 14 und das Wasserstoff-Zufuhrsystem 16 derart zu steuern, dass im zweiten Betriebsmodus des Raketenantriebssystems 10 die Zufuhr von Wasserstoff in die Brennkammer 12 unterbrochen wird.

Alternativ oder zusätzlich kann die Steuereinheit 20 dazu eingerichtet sein, das Sauerstoff-Zufuhrsystem 14 und das Wasserstoff-Zufuhrsystem 16 derart zu steuern, dass im ersten Betriebsmodus des Raketenantriebssystems 10 ein erster Sauerstoffmassenstrom in die Brennkammer 12 zugeführt wird, der kleiner ist als ein zweiter Sauerstoffmassenstrom, der im zweiten Betriebsmodus des Raketenbetriebssystems 10 in die Brennkammer 12 zugeführt wird.

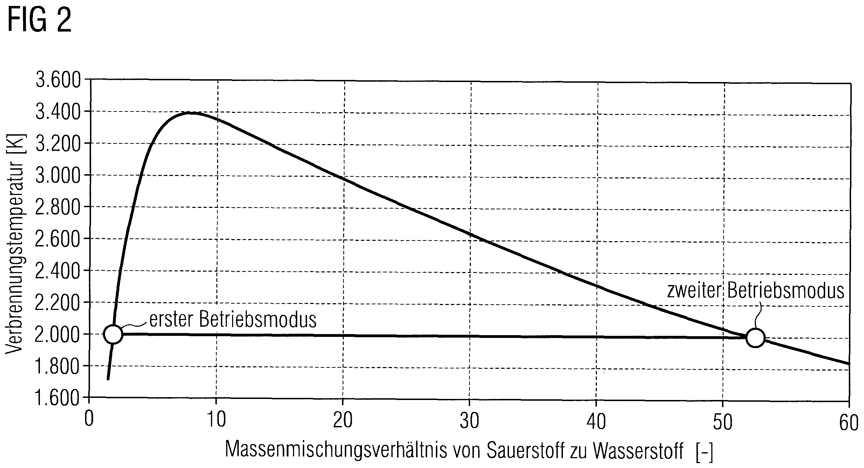

Figur 2 zeigt ein Diagramm, das einen beispielhaften Betrieb des in Figur 1 gezeigten Raketenantriebssystems 10 in dem ersten Betriebsmodus und in dem zweiten Betriebsmodus des Raketenantriebssystems 10 veranschaulicht. Darin dargestellt ist die Verbrennungstemperatur in der Brennkammer 12 als Funktion des Massenmischungsverhältnisses von Sauerstoff zu Wasserstoff des in die Brennkammer 12 zugeführten Sauerstoff-Wasserstoff-Gemischs. Die Abszisse des Diagramms zeigt das Massenmischungsverhältnis von Sauerstoff zu Wasserstoff des in die Brennkammer 12 zugeführten Sauerstoff-Wasserstoff-Gemischs und die Ordinate des Diagramms die Verbrennungstemperatur in der Brennkammer 12, die durch Verbrennung des in die Brennkammer 12 zugeführten Sauerstoff-Wasserstoff-Gemischs entsteht. Wie in Figur 2 veranschaulicht, ist die Verbrennungstemperatur in der Brennkammer 12 bei der Verbrennung eines stöchiometrischen Sauerstoff-Wasserstoff-Gemischs, d.h. bei einem Massenmischungsverhältnis von Sauerstoff zu Wasserstoff von 8, am höchsten.

In dem ersten Betriebsmodus des Raketenantriebssystems 10 wird Sauerstoff und Wasserstoff in einem Massenmischungsverhältnis von im Wesentlichen 2 in die Brennkammer 12 zugeführt. In dem zweiten Betriebsmodus des Raketenantriebssystems 10 wird Sauerstoff und Wasserstoff in einem Massenmischungsverhältnis von im Wesentlichen 52 der Brennkammer 12 zugeführt. In dem ersten und dem zweiten Betriebsmodus des Raketenantriebssystems 10 beträgt die Verbrennungstemperatur jeweils 2000 K.

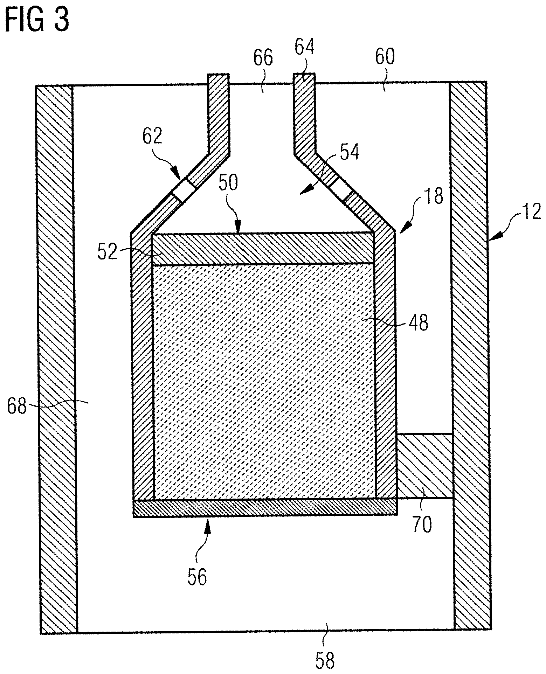

Figur 3 zeigt einen vergrößerten Längsschnitt der in Figur 1 gezeigten Brennkammer 12 des Raketenantriebssystems 10 mit dem darin angeordneten Zündsystem 18. Das Zündsystem 18 umfasst eine in der Brennkammer 12 angeordnete Katalysatorkammer 48, die dazu eingerichtet ist die Verbrennung des in die Brennkammer 12 zugeführten Sauerstoff-Wasserstoff-Gemischs zu initiieren. Die Steuereinheit 20 ist dazu eingerichtet, das Sauerstoff-Zufuhrsystem 14, das Wasserstoff-Zufuhrsystem 16 und das Zündsystem 18 derart zu steuern, dass zumindest ein erster Teil des in die Brennkammer 12 zugeführten Sauerstoffs und zumindest ein Teil des in die Brennkammer 12 zugeführten Wasserstoffs in die Katalysatorkammer 48 geleitet werden und in der Katalysatorkammer 48 die Verbrennung des Sauerstoff-Wasserstoff-Gemischs initiiert wird. Die Katalysatorkammer 48 weist eine Eingangsfläche 50 auf, über die der Katalysatorkammer 48 in die Brennkammer 12 zugeführter Sauerstoff und Wasserstoff zuführbar sind. Im Bereich der Eingangsfläche 50 der Katalysatorkammer 48 ist ein Flammenrückschlagverhinderer 52 in der Katalysatorkammer 48 angeordnet, der dazu eingerichtet ist, eine Entzündung des in die Katalysatorkammer 48 zuzuführenden Sauerstoff-Wasserstoff-Gemischs stromaufwärts der Katalysatorkammer 48 zu verhindern.

Stromaufwärts des Flammenrückschlagverhinderers 52 umfasst die Katalysatorkammer 48 eine Vormischkammer 54 zur Vormischung des in die Katalysatorkammer 48 geleiteten Sauerstoffs und des in die Katalysatorkammer 48 geleiteten Wasserstoffs vor der Initiierung der Verbrennung des Sauerstoff-Wasserstoff-Gemischs. Die Vormischkammer 54 mündet in die Eingangsfläche 50 der Katalysatorkammer 48 und ist im Wesentlichen senkrecht zu dieser angeordnet. Ein Strömungsquerschnitt der Vormischkammer 54 ist derart ausgebildet, dass dieser in Richtung der Eingangsfläche 50 der Katalysatorkammer 48, d.h. in Strömungsrichtung, größer wird.

Die Katalysatorkammer 48 umfasst weiterhin eine Ausgangsfläche 56, über die in der Katalysatorkammer 48 erzeugte Abgase einem stromabwärts der Ausgangsfläche 56 der Katalysatorkammer 48 angeordneten Verbrennungsabschnitt 58 der Brennkammer 12 zugeführt werden.

Ein in der Brennkammer 12 angeordneter Sauerstoffzufuhrkanal 60 ist dazu eingerichtet, zumindest den ersten Teil des in die Brennkammer 12 zugeführten Sauerstoffs in die Vormischkammer 54 der Katalysatorkammer 48 und einen zweiten Teil des in die Brennkammer 12 zugeführten Sauerstoffs in den Verbrennungsabschnitt 58 der Brennkammer 12 zu leiten. Um den ersten Teil des in die Brennkammer zugeführten Sauerstoffs in die Vormischkammer 54 der Katalysatorkammer 48 zu leiten, wird Sauerstoff über eine Sauerstoffzufuhröffnung 62, die in einer dem Sauerstoffzufuhrkanal 60 zugewandten Katalysatorkammerwand 64 ausgebildet ist, in die Vormischkammer 54 der Katalysatorkammer 48 zugeführt.

Weiterhin ist ein Wasserstoffzufuhrkanal 66 in der Brennkammer 12 angeordnet, über den in die Brennkammer 12 zugeführter Wasserstoff in die Katalysatorkammer 48 zugeführt wird. Der Wasserstoffzufuhrkanal 66 mündet in die Vormischkammer 54 der Katalysatorkammer 48 und ist im Wesentlichen senkrecht zu der Eingangsfläche 50 der Katalysatorkammer 48 angeordnet. In der hier gezeigten Ausführungsform des Raketenantriebssystems 10 weist der Wasserstoffzufuhrkanal 66 einen kreisförmigen Querschnitt auf, wobei der Sauerstoffzufuhrkanal 60 von dem Wasserstoffzufuhrkanal 66 durchsetzt wird. Entsprechend ist der Sauerstoffzufuhrkanal 60 in Form eines Ringspalts mit einem ringförmigen Querschnitt ausgebildet.

Das Zündsystem 18 des Raketenantriebssystems 10 ist derart ausgebildet, dass die Katalysatorkammerwand 64 die Katalysatorkammer 48, die Vormischkammer 54 und den Wasserstoffzufuhrkanal 66 bildet, wobei der Sauerstoffzufuhrkanal 60 zwischen einer Innenfläche der Brennkammer 12 und einer Außenfläche der Katalysatorkammerwand 64 angeordnet ist.

Die Katalysatorkammer 48 ist zumindest abschnittsweise von einem zwischen einer durch die Katalysatorkammerwand 64 gebildeten Außenfläche der Katalysatorkammer 48 und der Innenfläche der Brennkammer 12 angeordneten Kühlkanal 68 umgeben. Der Kühlkanal 68 mündet in den stromabwärts der Ausgangsfläche 56 der Katalysatorkammer 48 angeordneten Verbrennungsabschnitt 58 der Brennkammer 12 und wird von dem zweiten Teil des in die Brennkammer 12 zugeführten Sauerstoffs durchströmt. Der Sauerstoffzufuhrkanal 60 mündet in den Kühlkanal 68.

In dem Kühlkanal 68 ist ein Drallerzeugungsmittel in Form eines Swirlers 70 angeordnet, der dazu eingerichtet ist, den über den Kühlkanal 68 in den Verbrennungsabschnitt 58 zuzuführenden Sauerstoff in Drall zu versetzen. So kann die Verweilzeit des den Kühlkanal 68 durchströmenden Sauerstoffs in dem Kühlkanal 68 erhöht werden. Alternativ kann das Drallerzeugungsmittel in Form von in dem Kühlkanal 68 vorgesehenen tangential angestellten Bohrungen bereitgestellt sein.

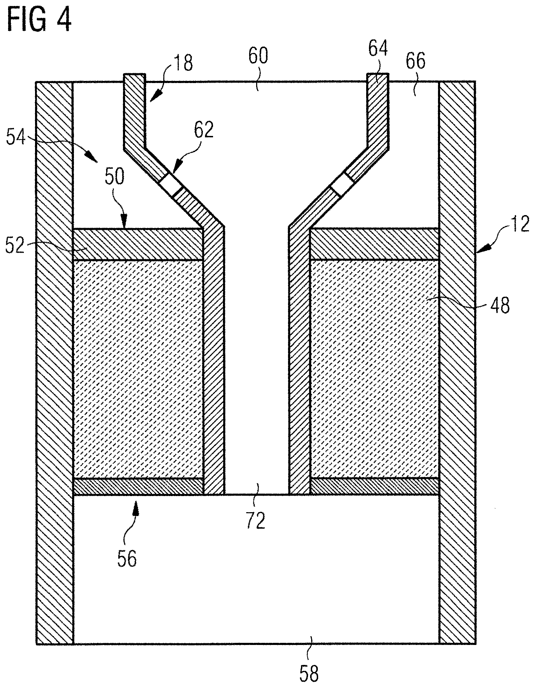

In Figur 4 ist eine Brennkammer 12 einer zweiten Ausführungsform des Raketenantriebssystems 10 gezeigt. Gegenüber der in Figur 3 gezeigten Ausführungsform liegt eine äußere Außenfläche der Katalysatorkammer 48 an der Innenfläche der Brennkammer 12 an. Die Katalysatorkammer 48 wird zumindest abschnittsweise von einem Kernkanal 72 durchsetzt, der in den stromabwärts der Ausgangsfläche 56 der Katalysatorkammer 48 angeordneten Verbrennungsabschnitt 58 mündet. In der hier gezeigten Ausführungsform weist der Sauerstoffzufuhrkanal 60 einen kreisförmigen Querschnitt auf, wobei der Wasserstoffzufuhrkanal 66 von dem Sauerstoffzufuhrkanal 60 durchsetzt wird. Der Sauerstoffzufuhrkanal 60 mündet in den Kernkanal 72, wobei der Kernkanal 72 von dem zweiten Teil des in die Brennkammer 12 zugeführten Sauerstoffs durchströmt wird und diesen in den Verbrennungsabschnitt 58 der Brennkammer 12 leitet. Der Kernkanal 72 ist dazu eingerichtet, den den Kernkanal 72 durchströmenden Sauerstoff entlang einer durch die Katalysatorkammerwand 64 gebildeten inneren Außenfläche der Katalysatorkammer 48 zu leiten.

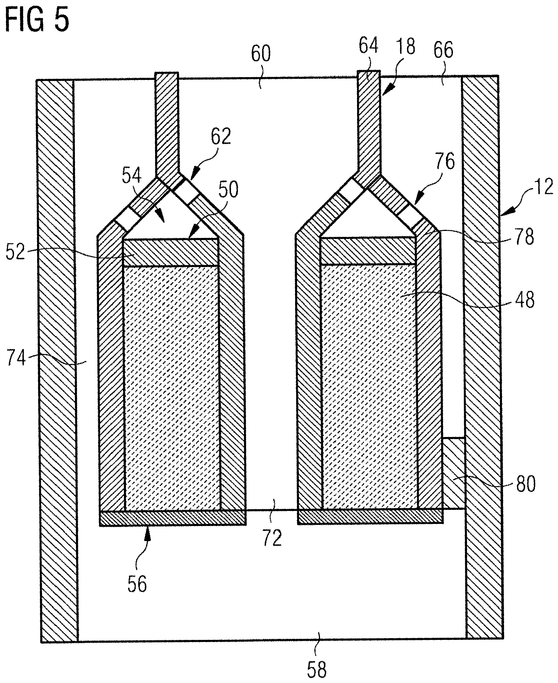

Figur 5 zeigt einen vergrößerten Längsschnitt der in Figur 1 gezeigten Brennkammer 12 eines Raketenantriebssystems 10 einer dritten Ausführungsform. Die Katalysatorkammer 48 wird hier durch den Kernkanal 72 durchsetzt, der von dem zweiten Teil des in die Brennkammer 12 zugeführten Sauerstoffs durchströmt wird und diesen in den Verbrennungsabschnitt 58 der Brennkammer 12 leitet.

In der hier gezeigten Ausführungsform ist der Wasserstoffzufuhrkanal 66 dazu eingerichtet, zumindest einen ersten Teil des in die Brennkammer 12 zugeführten Wasserstoffs in die Katalysatorkammer 48 und einen zweiten Teil des in die Brennkammer 12 zugeführten Wasserstoffs über einen Kühlkanal 74 in den Verbrennungsabschnitt 58 der Brennkammer 12 zu leiten. Der erste Teil des in die Brennkammer 12 zugeführten Wasserstoffs wird über eine Wasserstoffzufuhröffnung 76, die in einer dem Wasserstoffzufuhrkanal 66 zugewandten weiteren, äußeren Katalysatorkammerwand 78 ausgebildet ist, in die Vormischkammer 54 der Katalysatorkammer 48 zugeführt.

Der von dem zweiten Teil des in die Brennkammer 12 zugeführten Wasserstoffs durchströmbare Kühlkanal 74 ist zwischen der äußeren Außenfläche der Katalysatorkammer 48 und der Innenfläche der Brennkammer 12 angeordnet. Die Katalysatorkammer 48 ist zumindest abschnittsweise von dem Kühlkanal 74 umgeben. Der Kühlkanal 74 ist derart ausgebildet, dass der über den Kühlkanal 74 dem Verbrennungsabschnitt 58 zugeführte Wasserstoff einen reaktiven und oxidatorarmen Kühlfilm an der Innenfläche der Brennkamm 12 in dem Verbrennungsabschnitt 58 der Brennkammer 12 ausbildet. Dies hat den Effekt, dass entlang der Innenfläche der Brennkammer 12 reduktive Bedingungen vorherrschen können und so eine Reaktion einer Brennkammerwand mit Sauerstoff verhindert werden kann. Gleichzeitig können dadurch im Betrieb des Raketenantriebssystems 10 im Bereich der Brennkammerwand geringere Verbrennungstemperaturen erreicht werden. Weiterhin ist der Kernkanal 72 derart ausgebildet, dass der dem Verbrennungsabschnitt 58 der Brennkammer 12 über den Kernkanal 72 zugeführte Sauerstoff einen oxidatorreichen Gaskern mit höheren Verbrennungstemperaturen in dem Verbrennungsabschnitt 58 der Brennkammer 12 ausbildet, der von dem durch den Kühlkanal 74 ausgebildeten Kühlfilm umschlossen wird. Mit anderen Worten, durch den den Gaskern umschließenden Kühlfilm kann eine Wärmeisolierung zwischen dem hohe Verbrennungstemperaturen aufweisenden Gaskern und der Brennkammerwand bereitgestellt werden. So kann die thermische Belastung auf die Brennkammerwand während des Betriebs des Raketenantriebssystems 10 verringert werden.

In dem Kühlkanal 74 ist ein Drallerzeugungsmittel in Form eines Swirlers 80 angeordnet, der dazu eingerichtet ist, den über den Kühlkanal 74 in den Verbrennungsabschnitt 58 zuzuführenden Wasserstoff in Drall zu versetzen. Alternativ kann das Drallerzeugungsmittel in Form von in dem Kühlkanal 74 vorgesehenen tangential angestellten Bohrungen bereitgestellt sein.

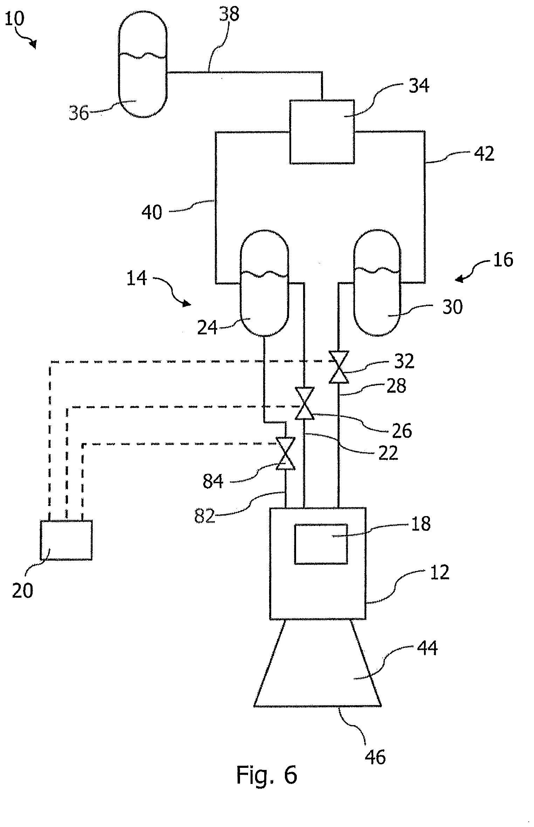

In Figur 6 ist eine schematische Ansicht eines Raketenantriebssystems 10 einer vierten Ausführungsform gezeigt. Das in Figur 6 gezeigte Raketenantriebssystem 10 unterscheidet sich gegenüber der in Figur 1 gezeigten Ausführungsform dadurch, dass das Sauerstoff-Zufuhrsystem 14 eine mit der Brennkammer 12 verbundene weitere Sauerstoffzufuhrleitung 82 aufweist. Die weitere Sauerstoffzufuhrleitung 82 ist dazu eingerichtet, Sauerstoff aus dem Sauerstoff-Speicher 24 der Brennkammer 12 zuzuführen. In der weiteren Sauerstoffzufuhrleitung 82 ist ein mit der Steuereinheit 20 verbundenes weiteres Sauerstoffzufuhrventil 84 bereitgestellt, wobei über das weitere Sauerstoffzufuhrventil 84 ein in die Brennkammer 12 zuzuführender weiterer Sauerstoffmassenstrom einstellbar ist.

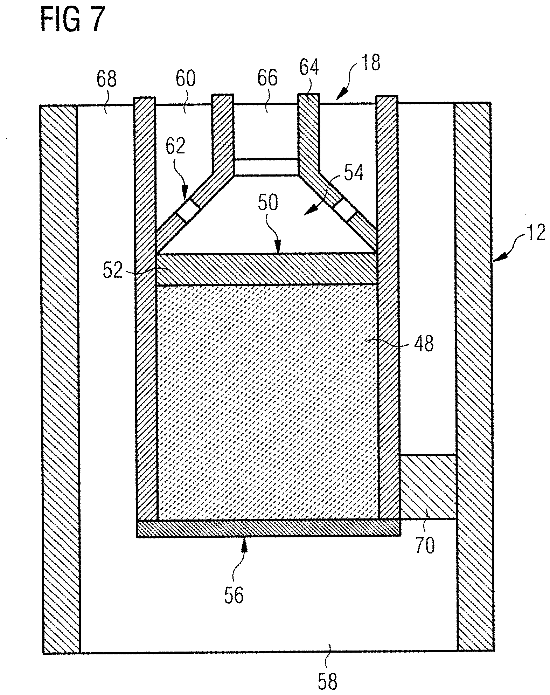

Figur 7 zeigt einen vergrößerten Längsschnitt der in Figur 6 gezeigten Brennkammer 12. Gegenüber der in Figur 3 gezeigten Ausführungsform des Raketenantriebssystems 10 ist in der hier gezeigten Ausführungsform der in der Brennkammer 12 angeordnete Sauerstoffzufuhrkanal 60 nicht mit dem Kühlkanal 68 verbunden. Mit anderen Worten, der Sauerstoffzufuhrkanal 60 ist von dem Kühlkanal 68 getrennt. Der Sauerstoffzufuhrkanal 60 ist dazu eingerichtet, den der Brennkammer 12 mittels der Sauerstoffzufuhrleitung 22 des Sauerstoff-Zufuhrsystems 14 zugeführten Sauerstoff über die Sauerstoffzufuhröffnung 62 und die Vormischkammer 54 der Katalysatorkammer 48 in die Katalysatorkammer 48 zuzuführen. In der hier gezeigten Ausführungsform ist der Kühlkanal 68 mit der weiteren Sauerstoffzufuhrleitung 82 des Sauerstoff-Zufuhrsystems 14 verbunden und dazu eingerichtet, den der Brennkammer 12 mittels der weiteren Sauerstoffzufuhrleitung 82 des Sauerstoff-Zufuhrsystems 14 zugeführten Sauerstoff in den Verbrennungsabschnitt 58 der Brennkammer 12 zuzuführen.

Die Steuereinheit 20 ist dabei vorzugsweise dazu eingerichtet, das Sauerstoff-Zufuhrsystem 14, das Wasserstoff-Zufuhrsystem 16 und das Zündsystem 18 derart zu steuern, dass in dem ersten Betriebsmodus und dem zweiten Betriebsmodus des Raketenantriebssystems 10 der den Kühlkanal 68 durchströmende Sauerstoffmassenstrom variiert wird. Insbesondere kann die Steuereinheit 20 dazu eingerichtet sein, das Sauerstoff-Zufuhrsystem 14, das Wasserstoff-Zufuhrsystem 16 und das Zündsystem 18 derart zu steuern, dass der Kühlkanal 68 nur in dem zweiten Betriebsmodus des Raketenantriebssystems 10 von Sauerstoff durchströmt wird.

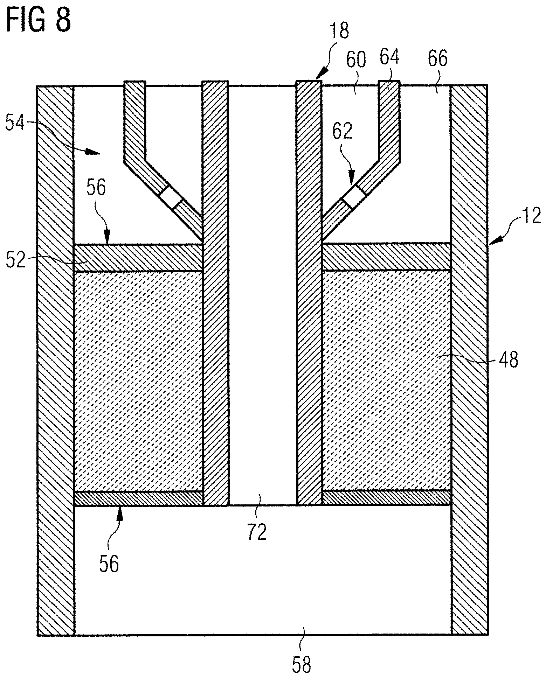

Figur 8 zeigt einen vergrößerten Längsschnitt der in Figur 6 gezeigten Brennkammer 12 des Raketenantriebssystems 10 einer fünften Ausführungsform. Gegenüber der in Figur 4 gezeigten Ausführungsform des Raketenantriebssystems 10 ist der in der Brennkammer 12 angeordnete Sauerstoffzufuhrkanal 60 nicht mit dem Kernkanal 72 verbunden. Mit anderen Worten, der Sauerstoffzufuhrkanal 60 ist derart bereitgestellt, das dieser von dem Kernkanal 72 getrennt ist. Der Sauerstoffzufuhrkanal 60 ist dazu eingerichtet, den der Brennkammer 12 mittels der Sauerstoffzufuhrleitung 22 des Sauerstoff-Zufuhrsystems 14 zugeführten Sauerstoff über die Sauerstoffzufuhröffnung 62 und die Vormischkammer 54 der Katalysatorkammer 48 in die Katalysatorkammer 48 zuzuführen.

In der hier gezeigten Ausführungsform ist der Kernkanal 72 mit der weiteren Sauerstoffzufuhrleitung 82 des Sauerstoff-Zufuhrsystems 14 verbunden und dazu eingerichtet, den der Brennkammer 12 mittels der weiteren Sauerstoffzufuhrleitung 82 zugeführten Sauerstoff in den Verbrennungsabschnitt 58 der Brennkammer 12 zuzuführen.

Die Steuereinheit 20 ist dabei vorzugsweise dazu eingerichtet, das Sauerstoff-Zufuhrsystem 14, das Wasserstoff-Zufuhrsystem 16 und das Zündsystem 18 derart zu steuern, dass in dem ersten Betriebsmodus und dem zweiten Betriebsmodus des Raketenantriebssystems 10 der den Kernkanal 72 durchströmende Sauerstoffmassenstrom variiert wird. Insbesondere kann die Steuereinheit 20 dazu eingerichtet sein, das Sauerstoff-Zufuhrsystem 14, das Wasserstoff-Zufuhrsystem 16 und das Zündsystem 18 derart zu steuern, dass der Kernkanal 72 nur in dem zweiten Betriebsmodus des Raketenantriebssystems 10 von Sauerstoff durchströmt wird.

## Patentansprüche

1. Verfahren zum Betreiben eines Raketenantriebssystems (10), das umfasst:
- Zuführen von Sauerstoff in eine Brennkammer (12),
- Zuführen von Wasserstoff in die Brennkammer (12), und
- Verbrennen des Sauerstoff-Wasserstoff-Gemischs in der Brennkammer (12),
**dadurch gekennzeichnet, dass**
das Raketenantriebssystem (10) alternierend in einem ersten Betriebsmodus, in dem Sauerstoff und Wasserstoff in einem ersten Massenmischungsverhältnis von Sauerstoff zu Wasserstoff in die Brennkammer (12) zugeführt werden, und in einem zweiten Betriebsmodus, in dem Sauerstoff und Wasserstoff in einem zweiten Massenmischungsverhältnis von Sauerstoff zu Wasserstoff, das größer ist als das erste Massenmischungsverhältnis, in die Brennkammer (12) zugeführt werden, betrieben wird.

2. Verfahren nach Anspruch 1,
wobei das erste Massenmischungsverhältnis ein unterstöchiometrisches Massenmischungsverhältnis von Sauerstoff zu Wasserstoff ist, insbesondere ein Massenmischungsverhältnis kleiner als oder gleich 2, und wobei das zweite Massenmischungsverhältnis ein überstöchiometrisches Massenmischungsverhältnis von Sauerstoff zu Wasserstoff ist, insbesondere ein Massenmischungsverhältnis größer als oder gleich 50.

3. Verfahren nach Anspruch 1 oder 2,
wobei im ersten Betriebsmodus des Raketenantriebssystems (10) ein erster Wasserstoffmassenstrom in die Brennkammer (12) zugeführt wird, der größer ist als ein zweiter Wasserstoffmassenstrom, der im zweiten Betriebsmodus des Raketenantriebssystems (10) in die Brennkammer (12) zugeführt wird.

4. Verfahren nach einem der Ansprüche 1 bis 3,
wobei im zweiten Betriebsmodus des Raketenantriebssystems (10) die Zufuhr von Wasserstoff in die Brennkammer (12) unterbrochen wird.

5. Verfahren nach einem der Ansprüche 1 bis 4,
wobei im ersten Betriebsmodus des Raketenantriebssystems (10) ein erster Sauerstoffmassenstrom in die Brennkammer (12) zugeführt wird, der kleiner ist als ein zweiter Sauerstoffmassenstrom, der im zweiten Betriebsmodus des Raketenantriebssystems (10) in die Brennkammer (12) zugeführt wird.

6. Verfahren nach einem der Ansprüche 1 bis 5,
wobei zumindest ein Teil des in die Brennkammer (12) zugeführten Sauerstoffs und zumindest ein Teil des in die Brennkammer (12) zugeführten Wasserstoffs in eine Katalysatorkammer (48) geleitet werden und in der Katalysatorkammer (48) die Verbrennung des Sauerstoff-Wasserstoff-Gemischs initiiert wird, und wobei:
- im Bereich einer Eingangsfläche (50) der Katalysatorkammer (48) ein Flammenrückschlagverhinderer (52) angeordnet ist und/oder
- der in die Katalysatorkammer (48) geleitete Sauerstoff und der der in Katalysatorkammer (48) geleitete Wasserstoff in einer Vormischkammer (54) der Katalysatorkammer (48) vor der Initiierung der Verbrennung des Sauerstoff-Wasserstoff-Gemischs vorgemischt werden und/oder
- Sauerstoff über eine Sauerstoffzufuhröffnung (62), die in einer einem Sauerstoffzufuhrkanal (60) zugwandten Katalysatorkammerwand (64) ausgebildet ist, in die Katalysatorkammer (48) zugeführt wird und/oder
- Wasserstoff über einen in die Katalysatorkammer (48) mündenden Wasserstoffzufuhrkanal (66) oder über eine Wasserstoffzufuhröffnung (76), die in einer einem Wasserstoffzufuhrkanal (66) zugwandten Katalysatorkammerwand (78) ausgebildet ist, in die Katalysatorkammer (48) zugeführt wird.

7. Verfahren nach Anspruch 6,
wobei die Katalysatorkammer (48) zumindest abschnittsweise von einem zwischen einer Außenfläche der Katalysatorkammer (48) und einer Innenfläche der Brennkammer (12) angeordneten Kühlkanal (68; 74) umgeben ist, der in einen stromabwärts einer Ausgangsfläche (56) der Katalysatorkammer (48) angeordneten Verbrennungsabschnitt (58) der Brennkammer (12) mündet und von in die Brennkammer (12) zugeführtem Sauerstoff oder von in die Brennkammer (12) zugeführtem Wasserstoff durchströmt wird, wobei der Kühlkanal (68) insbesondere nur im zweiten Betriebsmodus des Raketenantriebssystems (10) von Sauerstoff durchströmt wird und/oder wobei in dem Kühlkanal (68; 74) vorzugsweise ein Drallerzeugungsmittel, insbesondere ein Swirler (70; 80), vorgesehen ist.

8. Verfahren nach Anspruch 6 oder 7,
wobei die Katalysatorkammer (48) zumindest abschnittsweise von einem Kernkanal (72) durchsetzt wird, der insbesondere nur im zweiten Betriebsmodus des Raketenantriebssystems (10) von Sauerstoff durchströmt wird.

9. Raketenantriebssystem (10), das umfasst:
- eine Brennkammer (12),
- ein Sauerstoff-Zufuhrsystem (14), das dazu eingerichtet ist, Sauerstoff in die Brennkammer (12) zuzuführen,
- ein Wasserstoff-Zufuhrsystem (16), das dazu eingerichtet ist, Wasserstoff in die Brennkammer (12) zuzuführen,
- ein Zündsystem (18), das dazu eingerichtet ist, eine Verbrennung des Sauerstoff-Wasserstoff-Gemischs in der Brennkammer (12) zu initiieren, und
- eine Steuereinheit (20),
**dadurch gekennzeichnet, dass** die Steuereinheit (20) dazu eingerichtet ist, das Sauerstoff-Zufuhrsystem (14) und das Wasserstoff-Zufuhrsystem (16) derart zu steuern, dass das Raketenantriebssystem (10) alternierend in einem ersten Betriebsmodus, in dem Sauerstoff und Wasserstoff in einem ersten Massenmischungsverhältnis von Sauerstoff zu Wasserstoff in die Brennkammer (12) zugeführt werden, und in einem zweiten Betriebsmodus, in dem Sauerstoff und Wasserstoff in einem zweiten Massenmischungsverhältnis von Sauerstoff zu Wasserstoff, das größer ist als das erste Massenmischungsverhältnis, in die Brennkammer (12) zugeführt werden, betrieben wird.

10. Raketenantriebssystem nach Anspruch 9,
wobei das erste Massenmischungsverhältnis ein unterstöchiometrisches Massenmischungsverhältnis von Sauerstoff zu Wasserstoff ist, insbesondere ein Massenmischungsverhältnis kleiner als oder gleich 2, und wobei das zweite Massenmischungsverhältnis ein überstöchiometrisches Massenmischungsverhältnis von Sauerstoff zu Wasserstoff ist, insbesondere ein Massenmischungsverhältnis größer als oder gleich 50.

11. Raketenantriebssystem nach Anspruch 9 oder 10, wobei die Steuereinheit (20) dazu eingerichtet ist, das Sauerstoff-Zufuhrsystem (14) und das Wasserstoff-Zufuhrsystem (16) derart zu steuern, dass im ersten Betriebsmodus des Raketenantriebssystems (10) ein erster Wasserstoffmassenstrom in die Brennkammer (12) zugeführt wird, der größer ist als ein zweiter Wasserstoffmassenstrom, der im zweiten Betriebsmodus des Raketenantriebssystems (10) in die Brennkammer (12) zugeführt wird, und wobei die Steuereinheit (20) insbesondere dazu eingerichtet ist, das Sauerstoff-Zufuhrsystem (14) und das Wasserstoff-Zufuhrsystem (16) derart zu steuern, dass im zweiten Betriebsmodus des Raketenantriebssystems (10) die Zufuhr von Wasserstoff in die Brennkammer (12) unterbrochen wird.

12. Raketenantriebssystem nach einem der Ansprüche 9 bis 11, wobei die Steuereinheit (20) dazu eingerichtet ist, das Sauerstoff-Zufuhrsystem (14) und das Wasserstoff-Zufuhrsystem (16) derart zu steuern, dass im ersten Betriebsmodus des Raketenantriebssystems (10) ein erster Sauerstoffmassenstrom in die Brennkammer (12) zugeführt wird, der kleiner ist als ein zweiter Sauerstoffmassenstrom, der im zweiten Betriebsmodus des Raketenantriebssystems (10) in die Brennkammer (12) zugeführt wird.

13. Raketenantriebssystem nach einem der Ansprüche 9 bis 12, wobei die Steuereinheit (20) dazu eingerichtet ist, das Sauerstoff-Zufuhrsystem (14), das Wasserstoff-Zufuhrsystem (16) und das Zündsystem (18) derart zu steuern, dass zumindest ein Teil des in die Brennkammer (12) zugeführten Sauerstoffs und zumindest ein Teil des in die Brennkammer (12) zugeführten Wasserstoffs in eine Katalysatorkammer (48) geleitet werden und in der Katalysatorkammer (48) die Verbrennung des Sauerstoff-Wasserstoff-Gemischs initiiert wird, und wobei:
- im Bereich einer Eingangsfläche (50) der Katalysatorkammer (48) ein Flammenrückschlagverhinderer (52) angeordnet ist und/oder
- die Katalysatorkammer (48) eine Vormischkammer (54) zur Vormischung des in die Katalysatorkammer (48) geleiteten Sauerstoffs und des in Katalysatorkammer (48) geleiteten Wasserstoffs vor der Initiierung der Verbrennung des Sauerstoff-Wasserstoff-Gemischs umfasst und/oder
- eine Sauerstoffzufuhröffnung (62) zur Zufuhr von Sauerstoff in die Katalysatorkammer (48) in einer einem Sauerstoffzufuhrkanal (60) zugwandten Katalysatorkammerwand (64) ausgebildet ist und/oder
- ein Wasserstoffzufuhrkanal (66) zur Zufuhr von Wasserstoff in die Katalysatorkammer (48) in die Katalysatorkammer (48) mündet oder eine Wasserstoffzufuhröffnung (76) zur Zufuhr von Wasserstoff in die Katalysatorkammer (48) in einer einem Wasserstoffzufuhrkanal (66) zugewandten Katalysatorkammerwand (78) ausgebildet ist.

14. Raketenantriebssystem nach Anspruch 13,
wobei die Katalysatorkammer (48) zumindest abschnittsweise von einem zwischen einer Außenfläche der Katalysatorkammer (48) und einer Innenfläche der Brennkammer (12) angeordneten Kühlkanal (68; 74) umgeben ist, der in einen stromabwärts einer Ausgangsfläche (56) der Katalysatorkammer (48) angeordneten Verbrennungsabschnitt (58) der Brennkammer (12) mündet und die Steuereinheit (20) dazu eingerichtet ist, das Sauerstoff-Zufuhrsystem (14) oder das Wasserstoff-Zufuhrsystem (16) derart zu steuern, dass der Kühlkanal (68; 74) von in die Brennkammer (12) zugeführtem Sauerstoff oder von in die Brennkammer (12) zugeführtem Wasserstoff durchströmt wird, wobei die Steuereinheit (20) insbesondere dazu eingerichtet ist, das Sauerstoff-Zufuhrsystem (14) derart zu steuern, dass der Kühlkanal (68) nur im zweiten Betriebsmodus des Raketenantriebssystems (10) von Sauerstoff durchströmt wird und/oder wobei in dem Kühlkanal (68; 74) vorzugsweise ein Swirler (70; 80) vorgesehen ist.

15. Raketenantriebssystem nach Anspruch 13 oder 14,
wobei die Katalysatorkammer (48) zumindest abschnittsweise von einem Kernkanal (72) durchsetzt wird und die Steuereinheit (20) insbesondere dazu eingerichtet ist, das Sauerstoff-Zufuhrsystem (14) derart zu steuern, dass der Kernkanal (72) nur im zweiten Betriebsmodus des Raketenantriebssystems (10) von Sauerstoff durchströmt wird.

## Claims

1. A method for operating a rocket propulsion system (10), which comprises:
- supplying oxygen to a combustion chamber (12),
- supplying hydrogen to the combustion chamber (12), and
- combustion of the oxygen-hydrogen mixture in the combustion chamber (12),
**characterized in that** the rocket propulsion system (10) is operated alternately in a first operating mode, in which oxygen and hydrogen are supplied to the combustion chamber (12) in a first mass mixing ratio of oxygen to hydrogen, and in a second operating mode, in which oxygen and hydrogen are supplied to the combustion chamber (12) in a second mass mixing ratio of oxygen to hydrogen that is greater than the first mass mixing ratio.

2. The method according to claim 1,
wherein the first mass mixing ratio is a sub-stoichiometric mass mixing ratio of oxygen to hydrogen, in particular a mass mixing ratio of less than or equal to 2, and wherein the second mass mixing ratio is a super-stoichiometric mass mixing ratio of oxygen to hydrogen, in particular a mass mixing ratio greater than or equal to 50.

3. The method according to claim 1 or 2,
wherein in the first operating mode of the rocket propulsion system (10), a first hydrogen mass flow is supplied to the combustion chamber (12) that is greater than a second hydrogen mass flow, which is supplied to the combustion chamber (12) in the second operating mode of the rocket propulsion system (10).

4. The method according to anyone of claims 1 to 3,
wherein the supply of hydrogen to the combustion chamber (12) is interrupted in the second operating mode of the rocket propulsion system (10).

5. The method according to anyone of claims 1 to 4,
wherein in the first operating mode of the rocket propulsion system (10), a first oxygen mass flow is supplied to the combustion chamber (12) that is smaller than a second oxygen mass flow, which is supplied to the combustion chamber (12) in the second operating mode of the rocket propulsion system (10).

6. The method according to anyone of claims 1 to 5,
wherein at least a portion of the oxygen supplied to the combustion chamber (12) and at least a portion of the hydrogen supplied to the combustion chamber (12) are conducted into a catalyst chamber (48) and the combustion of the oxygen-hydrogen mixture is initiated in the catalyst chamber (48), and wherein:
- a flashback arrestor (52) is arranged in the region of an entrance area (50) to the catalyst chamber (48) and/or
- the oxygen conducted into the catalyst chamber (48) and the hydrogen conducted into the catalyst chamber (48) are premixed in a premixing chamber (54) of the catalyst chamber (48) prior to initiating the combustion of the oxygen-hydrogen mixture and/or
- oxygen is supplied to the catalyst chamber (48) via an oxygen supply opening (62), which is formed in a catalyst chamber wall (64) facing an oxygen supply duct (60) and/or
- hydrogen is supplied to the catalyst chamber (48) via a hydrogen supply duct (66) opening into the catalyst chamber (48) or via a hydrogen supply opening (76), which is formed in a catalyst chamber wall (78) facing a hydrogen supply duct (66).

7. The method according to claim 6,
wherein the catalyst chamber (48) is enclosed, at least in sections, by a cooling duct (68; 74) arranged between an outer surface of the catalyst chamber (48) and an inner surface of the combustion chamber (12), which cooling duct (68; 74) opens into a combustion section (58) of the combustion chamber (12) arranged downstream of an exit area (56) of the catalyst chamber (48) and through which cooling duct (68; 74) oxygen supplied to the combustion chamber (12) or hydrogen supplied to the combustion chamber (12) flows, wherein oxygen flows through the cooling duct (68) in particular only in the second operating mode of the rocket propulsion system (10) and/or wherein a swirl generation means, in particular a swirler (70; 80), is preferably provided in the cooling duct (68; 74).

8. The method according to claim 6 or 7,
wherein a core duct (72) passes through the catalyst chamber (48), at least in sections, through which core duct (72) oxygen flows in particular only in the second operating mode of the rocket propulsion system (10).

9. A rocket propulsion system (10), which comprises:
- a combustion chamber (12),
- an oxygen supply system (14), which is configured to supply oxygen to the combustion chamber (12),
- a hydrogen supply system (16), which is configured to supply hydrogen to the combustion chamber (12),
- an ignition system (18), which is configured to initiate combustion of the oxygen-hydrogen mixture in the combustion chamber (12), and
- a control unit (20),
**characterized in that** the control unit (20) is configured to control the oxygen supply system (14) and the hydrogen supply system (16) so that the rocket propulsion system (10) is operated alternately in a first operating mode, in which oxygen and hydrogen are supplied to the combustion chamber (12) in a first mass mixing ratio of oxygen to hydrogen, and in a second operating mode, in which oxygen and hydrogen are supplied to the combustion chamber (12) in a second mass mixing ratio of oxygen to hydrogen that is greater than the first mass mixing ratio.

10. The rocket propulsion system according to claim 9,
wherein the first mass mixing ratio is a sub-stoichiometric mass mixing ratio of oxygen to hydrogen, in particular a mass mixing ratio of less than or equal to 2, and wherein the second mass mixing ratio is a super-stoichiometric mass mixing ratio of oxygen to hydrogen, in particular a mass mixing ratio greater than or equal to 50.

11. The rocket propulsion system according to claim 9 or 10,
wherein the control unit (20) is configured to control the oxygen supply system (14) and the hydrogen supply system (16) so that in the first operating mode of the rocket propulsion system (10), a first hydrogen mass flow is supplied to the combustion chamber (12) that is greater than a second hydrogen mass flow that is supplied to the combustion chamber (12) in the second operating mode of the rocket propulsion system (10), and wherein the control unit (20) in particular is configured to control the oxygen supply system (14) and the hydrogen supply system (16) so that in the second operating mode of the rocket propulsion system (10), the supply of hydrogen to the combustion chamber (12) is interrupted.

12. The rocket propulsion system according to anyone of claims 9 to 11,
wherein the control unit (20) is configured to control the oxygen supply system (14) and the hydrogen supply system (16) so that in the first operating mode of the rocket propulsion system (10), a first oxygen mass flow is supplied to the combustion chamber (12) that is smaller than a second oxygen mass flow that is supplied to the combustion chamber (12) in the second operating mode of the rocket propulsion system (10).

13. The rocket propulsion system according to anyone of claims 9 to 12,
wherein the control unit (20) is configured to control the oxygen supply system (14), the hydrogen supply system (16) and the ignition system (18) so that at least a portion of the oxygen supplied to the combustion chamber (12) and at least a portion of the hydrogen supplied to the combustion chamber (12) are conducted into a catalyst chamber (48) and the combustion of the oxygen-hydrogen mixture is initiated in the catalyst chamber (48), and wherein:
- a flashback arrestor (52) is arranged in the region of an entrance area (50) to the catalyst chamber (48) and/or
- the catalyst chamber (48) comprises a premixing chamber (54) for premixing of the oxygen conducted into the catalyst chamber (48) and the hydrogen conducted into the catalyst chamber (48) prior to initiating the combustion of the oxygen-hydrogen mixture and/or
- an oxygen supply opening (62) for supplying oxygen to the catalyst chamber (48) is formed in a catalyst chamber wall (64) facing an oxygen supply duct (60) and/or
- a hydrogen supply duct (66) for supplying hydrogen to the catalyst chamber (48) opens into the catalyst chamber (48) or a hydrogen supply opening (76) for supplying hydrogen to the catalyst chamber (48) is formed in a catalyst chamber wall (78) facing a hydrogen supply duct (66).

14. The rocket propulsion system according to claim 13,
wherein the catalyst chamber (48) is enclosed, at least in sections, by a cooling duct (68; 74) arranged between an outer surface of the catalyst chamber (48) and an inner surface of the combustion chamber (12), which cooling duct (68; 74) opens into a combustion section (58) of the combustion chamber (12) arranged downstream of an exit area (56) of the catalyst chamber (48) and the control unit (20) is configured to control the oxygen supply system (14) or the hydrogen supply system (16) so that oxygen supplied to the combustion chamber (12) or hydrogen supplied to the combustion chamber (12) flows through the cooling duct (68; 74), wherein the control unit (20) in particular is configured to control the oxygen supply system (14) so that oxygen flows through the cooling duct (68) only in the second operating mode of the rocket propulsion system (10) and/or wherein a swirler (70; 80) is preferably provided in the cooling duct (68; 74).

15. The rocket propulsion system according to claim 13 or 14,
wherein a core duct (72) passes through the catalyst chamber (48), at least in sections, and the control unit (20) is configured in particular to control the oxygen supply system (14) so that oxygen flows through the core duct (72) only in the second operating mode of the rocket propulsion system (10).

## Revendications

1. Procédé pour faire fonctionner un système de propulsion de fusée (10), comprenant :
- l'amenée d'oxygène dans une chambre de combustion (12),
- l'amenée d'hydrogène dans la chambre de combustion (12) et
- la combustion du mélange oxygène-hydrogène dans la chambre de combustion (12),
**caractérisé en ce que**
le système de propulsion de fusée (10) fonctionne en alternance dans un premier mode de fonctionnement dans lequel de l'oxygène et de l'hydrogène sont amenés dans la chambre de combustion (12) selon un premier rapport de mélange entre la masse d'oxygène et la masse d'hydrogène, et dans un deuxième mode de fonctionnement dans lequel de l'oxygène et de l'hydrogène sont amenés dans la chambre de combustion (12) selon un deuxième rapport de mélange entre la masse d'oxygène et la masse d'hydrogène qui est supérieur au premier rapport de mélange de masse.

2. Procédé selon la revendication 1,
le premier rapport de mélange de masse étant un rapport de mélange sous-stoechiométrique entre la masse d'oxygène et la masse d'hydrogène, en particulier un rapport de mélange de masse inférieur ou égal à 2, et le deuxième rapport de mélange de masse étant un rapport de mélange supra-stoechiométrique entre la masse d'oxygène et la masse d'hydrogène, en particulier un rapport de mélange de masse supérieur ou égal à 50.

3. Procédé selon la revendication 1 ou 2,
un premier débit massique d'hydrogène, qui est supérieur à un deuxième débit massique d'hydrogène amené dans la chambre de combustion (12) dans le deuxième mode de fonctionnement du système de propulsion de fusée (10), étant amené dans la chambre de combustion (12) dans le premier mode de fonctionnement du système de propulsion de fusée (10).

4. Procédé selon l'une des revendications 1 à 3,
l'amenée d'hydrogène dans la chambre de combustion (12) étant interrompue dans le deuxième mode de fonctionnement du système de propulsion de fusée (10).

5. Procédé selon l'une des revendications 1 à 4,
un premier débit massique d'oxygène, qui est inférieur à un deuxième débit massique d'oxygène amené dans la chambre de combustion (12) dans le deuxième mode de fonctionnement du système de propulsion de fusée (10), étant amené dans la chambre de combustion (12) dans le premier mode de fonctionnement du système de propulsion de fusée (10).

6. Procédé selon l'une des revendications 1 à 5,
au moins une partie de l'oxygène amené dans la chambre de combustion (12) et au moins une partie de l'hydrogène amené dans la chambre de combustion (12) étant envoyées vers une chambre de catalyseur (48) où sera amorcée la combustion du mélange oxygène-hydrogène, et
- un dispositif de non-retour de flammes (52) étant placé dans la zone d'une surface d'entrée (50) de la chambre de catalyseur (48) et/ou
- l'oxygène amené dans la chambre de catalyseur (48) et l'hydrogène amené dans la chambre de catalyseur (48) sont pré-mélangés dans une chambre de pré-mélange (54) de la chambre de catalyseur (48) avant l'amorçage de la combustion du mélange oxygène-hydrogène et/ou
- de l'oxygène étant amené dans la chambre de catalyseur (48) par une ouverture d'alimentation en oxygène (62) qui est réalisée dans une paroi (64) de la chambre de catalyseur tournée vers le conduit d'alimentation en oxygène (60) et/ou
- de l'hydrogène étant amené dans la chambre de catalyseur (48) par un conduit d'alimentation en hydrogène (66) qui débouche dans la chambre de catalyseur (48) ou par une ouverture d'alimentation en hydrogène (76) qui est réalisée dans une paroi (78) de la chambre de catalyseur tournée vers le conduit d'alimentation en hydrogène (66).

7. Procédé selon la revendication 6,
la chambre de catalyseur (48) étant entourée au moins en partie d'un conduit de refroidissement (68; 74) qui est placé entre une surface extérieure de la chambre de catalyseur (48) et une surface intérieure de la chambre de combustion (12), qui débouche dans un tronçon de combustion (58) de la chambre de combustion (12) disposé en aval d'une surface de sortie (56) de la chambre de catalyseur (48) et qui est traversé par l'oxygène et l'hydrogène amenés dans la chambre de combustion (12), le conduit de refroidissement (68) n'étant notamment traversé par de l'oxygène que dans le deuxième mode de fonctionnement du système de propulsion de fusée (10) et/ou un système de tourbillonnement, en particulier un tourbillonneur (70; 80), étant de préférence prévu dans le conduit de refroidissement (68; 74).

8. Procédé selon la revendication 6 ou 7,
la chambre de catalyseur (48) étant au moins en partie traversée par un conduit central (72) qui n'est notamment traversé par de l'oxygène que dans le deuxième mode de fonctionnement du système de propulsion de fusée (10).

9. Système de propulsion de fusée (10), comprenant :
- une chambre de combustion (12),
- un système d'alimentation en oxygène (14) qui est conçu pour amener de l'oxygène dans la chambre de combustion (12),
- un système d'alimentation en hydrogène (16) qui est conçu pour amener de l'hydrogène dans la chambre de combustion (12),
- un système de mise à feu (18) qui est conçu pour amorcer une combustion du mélange oxygène-hydrogène dans la chambre de combustion (12), et
- une unité de commande (20),
**caractérisé en ce que** l'unité de commande (20) est conçue pour commander le système d'alimentation en oxygène (14) et le système d'alimentation en hydrogène (16) de telle manière que le système de propulsion de fusée (10) fonctionne en alternance dans un premier mode de fonctionnement dans lequel de l'oxygène et de l'hydrogène sont amenés dans la chambre de combustion (12) selon un premier rapport de mélange entre la masse d'oxygène et la masse d'hydrogène, et dans un deuxième mode de fonctionnement dans lequel de l'oxygène et de l'hydrogène sont amenés dans la chambre de combustion (12) selon un deuxième rapport de mélange entre la masse d'oxygène et la masse d'hydrogène qui est supérieur au premier rapport de mélange de masse.

10. Système de propulsion de fusée selon la revendication 9,
le premier rapport de mélange de masse étant un rapport de mélange sous-stoechiométrique entre la masse d'oxygène et la masse d'hydrogène, en particulier un rapport de mélange de masse inférieur ou égal à 2, et le deuxième rapport de mélange de masse étant un rapport de mélange supra-stoechiométrique entre la masse d'oxygène et la masse d'hydrogène, en particulier un rapport de mélange de masse supérieur ou égal à 50.

11. Système de propulsion de fusée selon la revendication 9 ou 10,
l'unité de commande (20) étant conçue pour commander le système d'alimentation en oxygène (14) et le système d'alimentation en hydrogène (16) de telle manière que dans le premier de mode de fonctionnement du système de propulsion de fusée (10), il est amené dans la chambre de combustion (12) un premier débit massique d'hydrogène qui est supérieur à un deuxième débit massique d'hydrogène amené dans la chambre de combustion (12) dans le deuxième mode de fonctionnement du système de propulsion de fusée (10), et l'unité de commande (20) étant plus particulièrement conçue pour commander le système d'alimentation en oxygène (14) et le système d'alimentation en hydrogène (16) de telle manière que l'amenée d'hydrogène dans la chambre de combustion (12) est interrompue dans le deuxième mode de fonctionnement du système de propulsion de fusée (10).

12. Système de propulsion de fusée selon l'une des revendications 9 à 11,
l'unité de commande (20) étant conçue pour commander le système d'alimentation en oxygène (14) et le système d'alimentation en hydrogène (16) de telle manière que dans le premier mode de fonctionnement du système de propulsion de fusée (10), il est amené dans la chambre de combustion (12) un premier débit massique d'oxygène qui est inférieur à un deuxième débit massique d'oxygène amené dans la chambre de combustion (12) dans le deuxième mode de fonctionnement du système de propulsion de fusée (10).

13. Système de propulsion de fusée selon l'une des revendications 9 à 12,
l'unité de commande (20) étant conçue pour commander le système d'alimentation en oxygène (14), le système d'alimentation en hydrogène (16) et le système de mise à feu (18) de telle manière qu'au moins une partie de l'oxygène amené dans la chambre de combustion (12) et au moins une partie de l'hydrogène amené dans la chambre de combustion (12) étant envoyées vers une chambre de catalyseur (48) où est amorcée la combustion du mélange oxygène-hydrogène, et
- un dispositif de non-retour de flammes (52) étant placé dans la zone d'une surface d'entrée (50) de la chambre de catalyseur (48) et/ou
- la chambre de catalyseur (48) comprenant une chambre de pré-mélange (54) qui sert à pré-mélanger l'oxygène et l'hydrogène amenés dans la chambre de catalyseur (48) avant l'amorçage de la combustion du mélange oxygène-hydrogène et/ou
- une ouverture d'alimentation en oxygène (62) qui sert à amener de l'oxygène dans la chambre de catalyseur (48) étant réalisée dans une paroi (64) de la chambre de catalyseur tournée vers le conduit d'alimentation en oxygène (60) et qui débouche dans la chambre de catalyseur (48) et/ou
- un conduit d'alimentation en hydrogène (66) qui sert à amener de l'hydrogène dans la chambre de catalyseur (48) débouchant dans la chambre de catalyseur (48) ou une ouverture d'alimentation en hydrogène (76) qui sert à amener de l'hydrogène dans la chambre de catalyseur (48) étant réalisée dans une paroi (78) dans une paroi (64) de la chambre de catalyseur tournée vers le conduit d'alimentation en hydrogène (66).

14. Système de propulsion de fusée selon la revendication 13,
la chambre de catalyseur (48) étant entourée au moins en partie d'un conduit de refroidissement (68; 74) qui est placé entre une surface extérieure de la chambre de catalyseur (48) et une surface intérieure de la chambre de combustion (12) et qui débouche dans un tronçon de combustion (58) de la chambre de combustion (12) disposé en aval d'une surface de sortie (56) de la chambre de catalyseur (48), et l'unité de commande (20) étant conçue pour commander le système d'alimentation en oxygène (14) ou le système d'alimentation en hydrogène (16) de telle manière que le conduit de refroidissement (68; 74) est traversé par de l'oxygène ou par de l'hydrogène amenés dans la chambre de combustion (12), l'unité de commande (20) étant plus particulièrement conçue pour commander le système d'alimentation en oxygène (14) de telle manière que le conduit de refroidissement (68) n'est traversé par de l'oxygène que dans le deuxième mode de fonctionnement du système de propulsion de fusée (10) et/ou un système de tourbillonnement, en particulier un tourbillonneur (70; 80), étant de préférence prévu dans le conduit de refroidissement (68; 74).

15. Système de propulsion de fusée selon la revendication 13 ou 14,
la chambre de catalyseur (78) étant au moins en partie traversée par un conduit central (72) et l'unité de commande (20) étant plus particulièrement conçue pour commander le système d'alimentation en oxygène (14) de telle manière que le conduit central (72) n'est traversé par de l'oxygène que dans le deuxième mode de fonctionnement du système de propulsion de fusée (10).
